(19) **Europäisches Patentamt European Patent Office Office européen des brevets**

(11) **EP 4 326 039 B1**

(12) **EUROPEAN PATENT SPECIFICATION**

(45) Date of publication and mention of the grant of the patent:
**12.11.2025 Bulletin 2025/46**

(21) Application number: **22730310.4**

(22) Date of filing: **20.04.2022**

(51) International Patent Classification (IPC):
**A01B 39/18** *(2006.01)*    **A01B 79/00** *(2006.01)*

(52) Cooperative Patent Classification (CPC):
**A01B 39/18; A01B 79/005**

(86) International application number:
**PCT/IB2022/053687**

(87) International publication number:
**WO 2022/224159 (27.10.2022 Gazette 2022/43)**

(54) **INTRA-ROW WEEDING METHOD FOR AGRICULTURAL CROPS IN THE IMMEDIATE VICINITY OF THE ROOTS THEREOF**

VERFAHREN ZUR UNKRAUTBEKÄMPFUNG IN LANDWIRTSCHAFTLICHEN PFLANZENREIHEN IN UNMITTELBARER NÄHE IHRER WURZELN

PROCÉDÉ DE DESHERBAGE INTER RANG POUR CULTURES AGRICOLES À PROXIMITE IMMEDIATE DE LEURS RACINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2021 CZ 20210198**

(43) Date of publication of application:
**28.02.2024 Bulletin 2024/09**

(73) Proprietor: **Ullmanna S.r.o.**
**74601 Opava (CZ)**

(72) Inventors:
 • **ULLMANN, Jindrich**
 **74601 Opava (CZ)**
 • **ULLMANN, Martin**
 **74601 Opava (CZ)**
 • **CMELIK, Jan**
 **74601 Opava (CZ)**
 • **PLHAL, Jan**
 **63700 Brno (CZ)**

 • **SPACEK, Jan**
 **70800 Ostrava (CZ)**

(74) Representative: **Sedlák, Jirí**
**artpatent, advokatni kancelar s.r.o.**
**Dukelskych hrdinu 976/12**
**170 00 Praha 7 (CZ)**

(56) References cited:
**WO-A1-2012/094116    WO-A1-2021/016444**
**WO-A1-2021/159123    US-A1- 2019 239 502**
**US-A1- 2020 073 389**

 • **JOHNSTON RAYMOND: "Czech companies got a boost from StartupWorld Cup & Summit", EXPATS_CZ, 1 December 2021 (2021-12-01), pages 1 - 15, XP093141863, Retrieved from the Internet <URL:https://www.expats.cz/czech-news/article/czech-companies-got-a-boost-from-startup-world-cup-summit> [retrieved on 20240315]**

## Description

Field of the Invention

Agriculture, crop cultivation, automatic machine weeding, intra-row weeding.

Background of the Invention

Agriculture, and especially crop production, is a significant part of today's market. The aim is to grow quality crops in increasing demand while keeping the cost of growing them to a minimum level. The crops are often treated against weeds to thrive. There is a great variety of treatments available today. The simplest option is using herbicide products, which can be applied in an across-the-broad manner, for example, as a sowing area preparation or selectively for weed control in an already sown or planted area. Herbicides can be divided into root and foliar herbicides according to how they enter a plant, or the division is based on their mechanism of action. There is an inexhaustible choice of herbicides on the market, and they are widely used in agriculture, as they make it relatively cheap to increase yield by removing competing plants - weeds. However, in recent years, the impact of herbicides on the environment and soil quality has been intensively studied. There is an increasing need to protect the soil and treat it with care, and an increasing proportion of agricultural production is converting to organic farming, which prohibits the use of herbicides and other treating products.

With increasing organic production, there is also an increasing need for mechanization to enable the weeding of large areas of farmland that would simply be treated with herbicide in conventional farming but must be mechanically weeded out in organic farming. Some smaller organic producers still stick to hand weeding; however, that significantly increases the price of the final product. Mechanical weeding machines - so-called weeding machines - are increasingly popular with organic farmers because they can reduce the price of the product and keep it competitive.

The weeding machines are divided into inter-row and intra-row weeding machines. The inter-row weeding machines are substantially standard soil working machines, slightly modified for some applications, containing drawn plough blades of various shapes. The spacing of the plough blades corresponds to the spacing of the individual rows. During weeding, the plough blades are drawn and go between the rows, wherein the soil in space between the rows is loosened while pulling the weeds growing in between the rows with them. No complicated plough blade navigation is required; the only condition for the plough to work correctly is to keep the plough blades in between the rows. However, the inter-row weeding machines do not handle the weeds in the row, nor do they loosen the soil in the row, close to the crops where the loosening is most important. The growth of weeds in the field is thus regulated as the weeds in the inter-row are removed and do not multiply anymore, but the crops are still restricted by the weeds growing in the row.

On the other hand, the intra-row weeding machines require more sophisticated navigation as they involve close vicinity of the crops, which must not be damaged in any way. Currently, there are a number of intra-row weeding machines that are more or less close to the crops. The simplest solution is intra-row weeding while omitting a long thin line connecting all crops in one row. Such weeding machines move only in the row direction. Therefore, the crops are treated only on the sides, but the space between the crops remains untreated. So, if weeds grow in the same line as the crops, the weeding machine will not catch them. Some crops are not bothered by low weed levels. Finger weeders are an example of this kind of weeding machines. These contain a pair of weeding wheels to treat a single row, wherein the space between the wheels corresponds to the position of the crops in the row. The wheels are fitted with long pegs - fingers around the circumference thereof. The wheels sit on the soil surface and rotate, wherein the pegs loosen the soil from the sides around the crops present in the row.

If the crop requires weed removal directly in the line between the crops, there is a need for weeding machines able to remove weeds also between the individual crops in a single row. Such weeding machines are often customized for the individual crops and the requirements of each farmer. If the given crop is sown with great precision and the distance between the individual plants is constant, the weeding machine is also possible to be set to a constant weeding distance. An example of such a weeding machine is the Robocrop weeder containing one vertical weeding peg per row, being attached to a horizontal rotating disc. The disc diameter, or more precisely, the disc peg location correlates with the distance of the individual plants in the row. By rotating the disc and constant moving the weeding machine in the row direction, the peg zigzags between the individual plants, loosens the soil around them, and removes weeds. The loosening spacing between crops is constant. An illustrative video is available on the manufacturer's website http://garford.com.

Another example is the Machinefabriek Steketee B.V. weeder. The crops are circled by a semi-circular blade cutting the weeds below ground level. The blades are controlled by pneumatic cylinders. An illustrative video is available at https://www.steketee.com/producten/ic-weeder-2/.

Robokrop and similar weeding machines have the disadvantage of a relatively large space around the crop that is not cultivated. The weeding mechanism does not reach the close vicinity of the crop and this can lead to imperfect weeding and imperfect loosening of the soil in the close vicinity of the crop where it is required most.

The fixed-spacing weeding machines of the Robokrop type are not possible to be used for more or less irregularly sown crops. For such applications, the weeder or the movable weeding mechanism must be guided between the crops by a machine. In the vast majority of cases, image analysis is used to guide between crops, wherein the weeding mechanism is preceded by a camera, the image of which is evaluated by the image analysis and green plants are distinguished from brown soil on the basis of their different colors. The distinction between weeds and crops is then handled differently by each manufacturer, for example by fixing the row line, where each plant outside the line is evaluated as a weed, or by specifying the spacing interval of each crop, where everything outside these spacings is considered a weed.

Other representatives of intra-row weeding machines with movable weeding mechanism include, for example:

WO2008135867 (A2), PRECISION WEEDERS, applicants Griepentrog Hans-Werner and Univ Copenhagen; this document describes an intelligent peg weeding machine of the Robocrop-type having a scanning device to correct the movement of the weeding pegs.

US2014180549A1, AUTOMATED MACHINE FOR SELECTIVE IN SITU MANIPULATION OF PLANTS, applicants Gayler Ronald R, Herbon Ryan, Nolte Kurt D, Siemens Mark C, Univ Arizona State; this document describes a device for weed elimination based on image analysis. The plant enter is determined by calculations after the plant has been identified.

NL2001003, TUNING FORK AND STRIKING TOOL COMBINATION, HAS STRIKING ELEMENT FOR STRIKING ADJUSTABLE GUIDANCE ELEMENT THAT IS IN BETWEEN ENDS OF TWO LEGS OF TUNING FORK, WHERE GUIDANCE ELEMENT IS AT EQUAL DISTANCE FROM ENDS, Univ Wageningen; this document describes a fork to be mounted on a weeding machine and that moves by means of a piston in a direction perpendicular to the longitudinal axis of the rows. The fork foot weeds between the plants within the row and avoids the crop. When the fork is connected to a smart weeding machine, the weeding is all the more precise.

EP3578025A2, WEEDING MACHINE AND WEEDING ELEMENT, Lemken Gmbh & Co KG; this document describes a weeding machine capable of weeding between individual crops in a row thanks to the curved wire jaws thereof. Due to the inclination of the feet, the jaws move partly under the surface and partly on the surface. The weeding machine can be connected to an intelligent control.

Farming revolution. The weeding machine employs a rotating disc (mechanical chopper), guided by software between plants evaluated as crops by the image analysis. An illustrative video is available at https://farming-revolution.com/wordpress/.

Farmdroid. The weeding machine employs one moving weeding lever. An illustrative video is available at https://farmdroid.dk/en/contact/, or better at https://www.youtube.com/watch?v=JDl4hyYBWig.

Oliver Agro - Optyma. The weeding machine employs movable weeding levers swinging out between the crops and swinging in at the place of the crop. An illustrative video is available at https://www.oliveragro.com/product/organic/optyma-eng/, or better at https://www.youtube.com/watch?v=J5M4aFzSp78.

F. Poulsen Engineering ApS. The Robovator weeder with mechanical tools employs knives placed below the soil surface; the knives move in a jaw motion towards and away from each other, depending on the location of the plant. Again, the weeding machine is guided by image analysis. An illustrative video is available at https://www.visionweeding.com/robovator-mechanical/. fx

Veda Farming Solutions. The Remoweed weeder employs knives placed below the soil surface; the knives move in a jaw motion towards and away from each other. Similar to the Robovator, the Remoweed is also composed of individual modules fixed to a support structure and does not have their own wheels. Again, the weeding machine is guided by image analysis. An illustrative video is available at https://www.vedafarming.com/weeders-01-automatic.

The state of the art is clearly summarized in the publication FENNIMORE, Steven A., et al. Technology for automation of weed control in specialty crops. Weed Technology, 2016, 30.4: 823-837. The publication describes the current possibilities of automatic weeding as well as the vision of future developments in the field turning towards robotics and autonomous control of weeding machines.

The possibilities of software image evaluation are discussed in TILLETT, N. D., et al. Mechanical within-row weed control for transplanted crops using computer vision. Biosystems Engineering, 2008, 99.2: 171-178. The publication points out the shortcomings of the image analysis and the mere differentiation of green areas of the image - plant from the brown ones - soil.

It should be emphasized that the image analysis is a limiting feature of the automatic weeding machines, as it evaluates the entire green area of the image as a crop and, thus, guides the weeding mechanisms to avoid the green areas, usually approximated by a circle. However, the green areas are leaves under or between which weeds may still be growing that the image analyze-guided weeding machines are unable to detect. In addition, the soil under the leaves in the close vicinity of the crop still needs to be loosened. It is the weeds growing close to the crop that limits the crop the most. This is one of the reasons why automatic weeding machines are not yet mass deployed and why cheap herbicides are still used in organic conventional farming instead of even cheaper mechanical automated weeding.

Document WO 2021/016444 A1 describes a method of intra-row weeding of agricultural crops. Document WO 2021/159123 A1 (published on 12.08.2021) shows a system and method of intra-row weeding of agricultural crops in an immediate vicinity of their leaf rosette by means of a moving weeding machine provided with a camera to scan a weeding area, with software provided with a function of recognition of a cultivated crop among other crops or weeds, further provided with cultivator blades positioned behind the area scanned by the camera in a direction of weeding machine travel, positioned below ground level and able to come apart from a row axis and loosen the row up to the immediate vicinity of the crop, a field of view of the camera is calibrated, wherein sides of the field of view of the camera have a length corresponding to less that a spacing of the cultivated agricultural crop rows, the weeding machine is set in motion and moves parallel to the row axis; the camera takes images of the field of view at intervals; the evaluation software comprises a convolutional neural network (AI processing) trained to recognize centers of the cultivated agricultural crops, analyzes the images of the calibrated field of view of the camera where it detects and localizes the centers of the cultivated agricultural crops, and records positions of the detected and localized centers. A controller is configured to operate a plurality of agricultural tool actuators to open pairs of cultivator blades to a first distance before traversing one of the cultivated crops and close each pair of cultivator blades a second distance after traversing the one of the cultivated crops.

Summary of the Invention

The present invention provides a method of intra-row weeding of agricultural crops according to claim 1 and a movable weeding machine according to claim 15. Further aspects of the invention are defined in the dependent claims.

**Intra-row weeding method for agricultural crops in the immediate vicinity of the roots thereof, wherein the correct crop is identified, the exact center of the plant of that agricultural crop is localized, and the soil in the close vicinity of the plant and the wider surroundings thereof within the row is loosened and weeded out. They are two parameters unique to this weeding method - perfect detection of the crop center and the positioning of the weeding knives below the ground surface on arms sufficiently far from the crop center to allow the knives to access the crop root below the leaves from the sides without damaging the crop leaves. The knives are long enough, their outer ends are positioned behind the edges of the crop leaves in the working position when viewed from above, and an arm is attached to the outer ends thereof, which leads up into the weeder module.**

**The knife access under the leaves to the crop root requires high precision in localizing the plant center so that the root is not damaged or dug out by the loosening. The plant center is localized by**

**a software (SW) that evaluates the images taken by a camera. The frame rate is preferably 10 to 100 frames per second. The speed of the weeding machine move is preferably 0.5 to 2.5 m/s, wherein at least 5 images are taken per spacing between two plants of a given crop within one row, being about 15 images per second for a spacing of 15 cm and a speed of 0.5 m/s. The crop center is detected by using the convergence of the crop leaves, determining the center with high accuracy.**

**Weeding and loosening is carried out by a moving weeding machine fitted with weeding knives that senses the space of the row with planted or sown crop plantlets, detects the centers of these plants to localize the detected centers in the row space, where the weeding machine moves, and indirectly localizes the plantlet roots under the ground. The knives consistently loosen the entire row space below ground level and at the point where the plant center and, thus, the root have been localized and detected, the knives come apart, e.g. open, under precisely defined conditions so that the knives do not damage or dug out the plant with the root but, at the same time, the immediate surroundings and the entire row are well loosened and weeded out.**

**By positioning the knives below the ground surface, attaching them to the weeding module using arms spaced apart more than the diameter of the crop to be weeded or more than the spacing between crops sown, and by precisely localizing the center of the crop plant, access to the plant root in the immediate vicinity thereof is provided, but without damaging the above-ground part of the plant, i.e. the leaves, whose diameter above ground is much higher than the diameter of the root underground. The knives are positioned below the ground surface because it is not possible to get close to the root from the above ground due to the plant leaf rosette. However, the location of the plant centers must be precise and certain, otherwise, the entire planting and the subsequent crop would be damaged after passing the weeding machine.**

The center of the plant is the point, from which the stem grows out of the root, i.e. the first visible above-ground part of the plant. It is also possible that the leaf rosette will move away from the vertical axis of the root during growth and part of the stem will lie on the ground. In such cases, it is necessary to detect the point, from which the stem grows out of the root, not just the leaf convergence of the leaf rosette. In such cases, the plant root of the plant in question cannot be assumed to come from the center of the leaf rosette thereof when viewed from above. However, if a plantlet with such a distorted stem is pulled out of the ground and straightened, the plant center will lie in the vertical root axis. Therefore, for the purposes of the invention, this point is called the center of the plant.

A weeding machine to perform this method comprises at least one weeding module equipped with two weeding knives positioned below ground level during weeding, a camera scanning the ground surface in front of the weeding knives in the direction of movement of the weeding machine, and a computer with evaluation software. The weeding machine is positioned at the beginning of the row with the planted crop so that the camera can record the planted crop or consecutive plantlets with their spacing. The camera continuously scans the ground surface with plants, SW detects the centers of these plants and then localizes them in space, according to which the weeding knives are then controlled.

The weeding knives are positioned horizontally ±10%, attached to the arms, and the arms are attached to the weeding machine, or more precisely, to the weeding knife drive, wherein the distance from the knife-arm connection to the knife-edge is at least ½ of the spacing of crops being cultivated. This ensures the arms are apart more than the diameter of the crop being weeded, so the arms cannot damage the crop being weeded. Preferably, the knives are placed horizontally and the arms vertically, but other design variants are also possible, for example, the arms are curved or otherwise profiled. Preferably, a knife extension is positioned between the knife and the arm, which is preferably also horizontal as the knife and forms a coupling between the knife and the arm.

The SW has the ability to recognize individual crops, which it has acquired through a machine-learning model trained to identify the crop type. The model was presented with images of different plants, i.e. crops and weeds, growing side by side and gradually learned by machine learning to recognize the crop from itself and from the weed. The center of a given plant can be determined in two ways. Either by recognizing the desired crop and then determining the center thereof - This is the crop and this is the center thereof. Or by recognizing the crop and the center thereof at the same time - This is the center of the crop.

However, the recognition of different crops from each other is not an essential feature of the evaluation SW. The SW may contain preset recognition of different crops, from which the user chooses before the weeding itself. For example, the SW has preset recognition for sugar beet, corn and cabbage. The SW will not distinguish among these three crops in a single field, but if the user sets beet to be weeded before the weeding, the SW will only identify the beet or, more precisely, the center thereof.

The SW equipped in this way identifies the correct crop, i.e. the currently cultivated crop, localizes the center thereof or, more precisely, directly the center of the cultivated crop, and everything else, i.e. both weeds and different crops are weeded out by the weeding knives. If, for example, sugar beet is sown but there was maize last season, the AI now evaluates the occasional grown maize as undesirable, as only the sugar beet is supposed to be protected, and such maize will be weeded out with the other weeds.

**The weeding process is automatic and consists of several process stages - so-called lines - which run in parallel but with a slight time lag.**

Within the *recording line,* the camera continuously captures images of plants on the ground surface.

Within the *location line,* the SW detects and localizes crop centers in the recorded images, thus localizing them in space.

Within the *contact line,* SW controls the knives, which retreat from the localized crop center, or abort the weeding in the row around this center as the knives reach it.

Within the location or contact line, the time or distance from the crop center detection to its contact with the weeding knives is counted relative to the speed of the weeding machine movement. The center is detected within the location line and in a few hundred milliseconds, depending on the distance of the weeding knives from the scanned area, when the knives reach the crop center location, the weeding abort or retreat of the crop center knives occurs within the contact line. Thus the process is repeated over and over again and, at one time, the crop center is localized and at the same time the weeding around the previously detected other crop is aborted. Images are captured at a rate of preferably 30 to 80 frames per second.

In order for the whole process to run automatically, it is necessary for the SW to orient itself in the image space and to know at what distance the knives of the weeding machine are from the field of view, or more precisely location field, of the camera. The entire *field of view* of the camera is recorded by the image.

The distance can be defined either virtually, by entering at least one length parameter into the SW, or by programming it/them into the SW during its production. Physical calibration with a standard is preferably carried out. This is done by placing a standard = calibration object of known dimensions and defined shape in the area scanned by the weeding machine camera. The dimensions of the calibration object and preferably also the height of the camera location above the ground level are then entered into the SW, thanks to which the SW is able to process the camera image, or a series of captured images, in a perspective. If the center of the camera lens is deviated from the perpendicular to the terrain, the calibration also corrects the spatial distortion of the camera's field of view, or the captured image, resulting in a distortion-free image. This corrected field of view is used for further analysis.

Preferably, the dimensions and shape of the calibration object can be entered manually into the SW, or the calibration can be automated, for example, by predefining the calibration object in the SW - for example, a white sheet of paper with four defined marks. Once such an object is then placed in the camera's scanning area, calibration is started either manually or automatically and the SW evaluates and calibrates the object by itself.

The height of the camera location above the ground level can be measured manually and entered into the SW, or the height can be automatically measured by a sensor and the height information can be sent directly to the SW, for example, continuously during weeding, thus ensuring maximum accuracy of the SW calculations.

Another way how to calibrate camera images is to use a stereo camera, so-called a 3D camera. This camera is able to detect the image "depth", usually thanks to two lenses, and corrects itself by its own correction mechanism, usually software or another algorithm. The stereo camera is mainly used for very uneven terrains, where the evaluation of the travel speed of the weeding machine can be distorted, resulting, thus, in destroying the crops to be weeded. When the camera is looking at the crops positioned on just the raised place, they will appear larger and the space scanned by the camera will appear to be moving faster, the travel rate of the weeding machine will be distorted, and overtaking or delaying in coming the knives apart around the crops will cause damage to the crops as the knives will get down when they should be come apart.

Another input SW parameter is the current travel rate of the weeding machine. The travel rate of the weeding machine is preferably sensed by a sensor and the information is sent directly to the SW. In another preferred embodiment, the travel rate of the weeding machine is evaluated by the SW after calibration directly from the images taken by the camera during the weeding process.

*Location line*

*Location field*

Preferably, a virtual *location field,* i.e. a part of the *field of view* recorded in the image, is defined for the SW, where the SW will detect and localize the crops during weeding. The location field is defined as a cutout of the camera's field of view, where the location field can be as large as the camera's field of view. However, the location field is preferably smaller than the camera's field of view, thereby focusing the center analysis on a particular plant, and the size thereof is preferably determined by the spacing of the crops to be weeded in the row, i.e. the length of the location field in the direction of the weeding machine travel is preferably smaller than the spacing of the crops in the row, or the size of the weeding crops, so that the location field covers the entire single crop to be weeded. **Once the crops have grown to a size where their leaves overlap each other in a single row, there is no need for intra-row weeding, as weeds no longer thrive under the crop leaves.** The width of the location field is preferably equal to or greater than the length thereof, and the location field preferably has the shape of a square or rectangle. Preferably, the location filed and field of view have a common edge, wherein the common edge is the closest edge of the field of view from the knives.

Once defining the *location field,* it is necessary to enter a definable distance of the weeding knife from the location field or the field of view, preferably the shortest distance, into the SW. This information, together with the current speed of the weeding machine, is used by the SW to calculate or read the exact time or distance to knife contact with the crop. Or, the SW uses it to create a map with the recorded locations of detected plant centers. Thus, the SW is able to instruct the knives to open in time, or to move away from the row axis and thus away from the crop.

*Detection field*

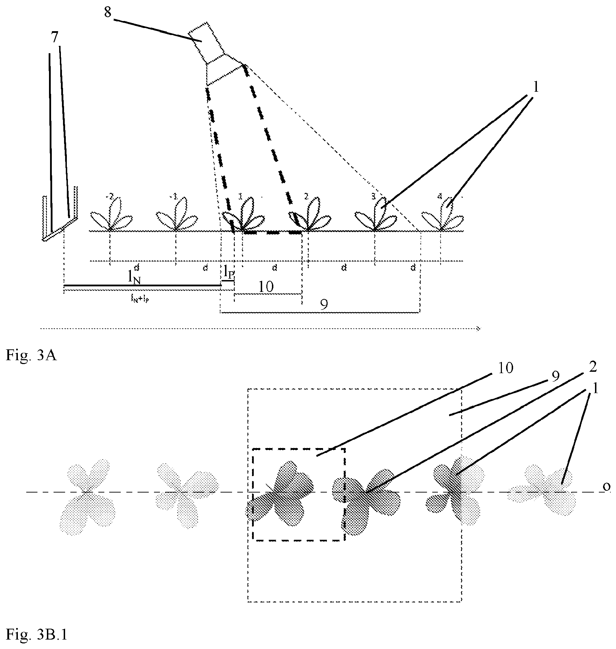

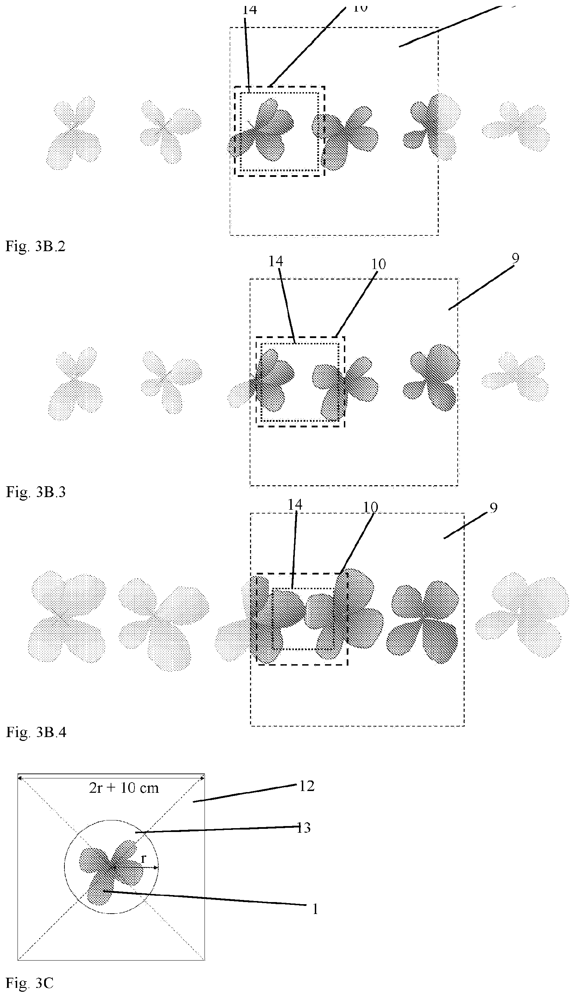

**Since the aim is to weed as close to the crops as possible to remove as many weeds as possible, the crop center must be determined with high precision.** Therefore, the *detection field* is preferably defined within the location field, which defines a filtering region between the detection field and the location field. This filtering region is designed to filter out uncertain centers in images where the crop is only partially captured, close to the edge of the location field, and thus the leaf convergence to the crop center is not sufficiently visible. Only the determined crop centers localized in the detection field are then validated as correctly determined and are further evaluated and used in the calculations. Since there is a certainty that SW has seen the whole central part of the crop, the center is correctly determined. In cases where the crop center is captured close to the location field edge, the crop center may be determined inaccurately, resulting in damage to the plantlet by the weeding knives. Therefore, the detection field is always smaller than the location field and the size thereof is preferably determined by the size of the crop to be weeded so that the larger the crop is, the higher distance between the location field and the detection field must be defined in order to capture the whole crop in the image and, therefore, the smaller the detection field is set. If the plant center does not fit into the detection field, it is not validated (Figure 3B.2, 3B.3).

Preferably, the length of *the detection field* in the direction of the weeding machine travel and the width of the detection field are defined for crops with a circular projection from above covering the entire crop leaves of less than 8 cm to a maximum of $d$ - 2 cm, where $d$ is the distance between individual crops in a single row. The length of the detection field in the direction of the weeding machine travel and the width of the detection field are defined for crops with a circular projection from above covering the entire crop leaves of greater than 8 cm to a maximum of $d$ - 5 cm, where $d$ is the distance between individual crops in a single row.

*Contact line*

The *contact line* defines a defined zone in the vicinity of the detected crop centers, in which the knives will move when circling the crop or avoiding the detected crop center. The SW evaluates the time and/or distance to the contact of the knives with the detected crop centers, and when the knives enter the defined zones around the crops, the SW commands the knives to **temporarily** open or move away from the row axis, and when the knives exit the defined zones, the SW commands the knives to get down again to the row axis.

According to the estimated root diameter of the crop currently weeded, the size of the defined zone around the individual plants of the weeded crop is preset before the actual weeding. The weeding knives move within this defined zone during weeding, while circling each plant. The size of the defined zone is preferably updated continuously during weeding.

*Defined zone*

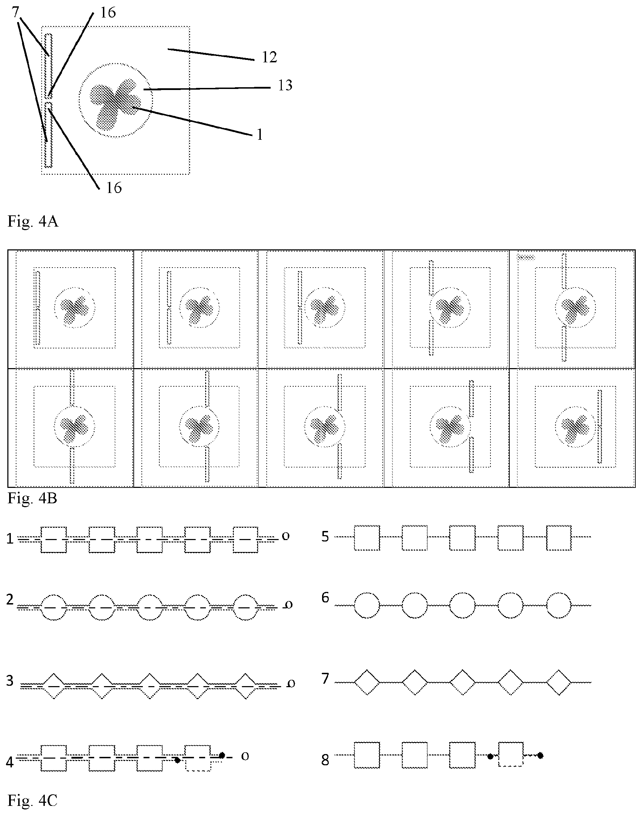

*The defined zone,* i.e. the area where the edges of the weeding knives move in the close vicinity of the plants being weeded is defined as an area between the circle and the square. The circle, i.e. the inner boundary of the defined zone, has a radius r and center at the localized plant center and forms boundary of a protective zone around the plant center, into which the knives must not enter in order not to damage the plant. The circle radius $r$ is equal to the radius $r_K$ of the root of the plant being weeded out + 1 cm. The square, i.e. the outer boundary of the defined zone, has a side length of $2r + 10\,cm$ and the center is also in the plant center. The exact trajectory of the knives within the defined zone depends on the type of crop being weeded out and the travel rate of the weeding machine. For crops with a single central root, such as sugar beet, the weeding knives move closer to the plant and, therefore, closer to the inner border circle. For crops with a wide root system, such as maize, the weeding knives move further away from the plantlet to avoid damaging the wide roots thereof, i.e. closer to the outer border square. The weeding knives must move within this defined zone to ensure that the soil around the crop is sufficiently loosened and that the crop is not damaged. When the knives pass through this area of the defined zone, the SW instructs either to temporarily open the clamped knives, or the SW instructs to open the clamped knives when the weeding knives enter this defined zone and to re-clamp the knives when leaving the defined zone. The defined zone is described in Figure 3C and the movement of the knives within the defined zone is described in Figures 4A and 4B and 4C.

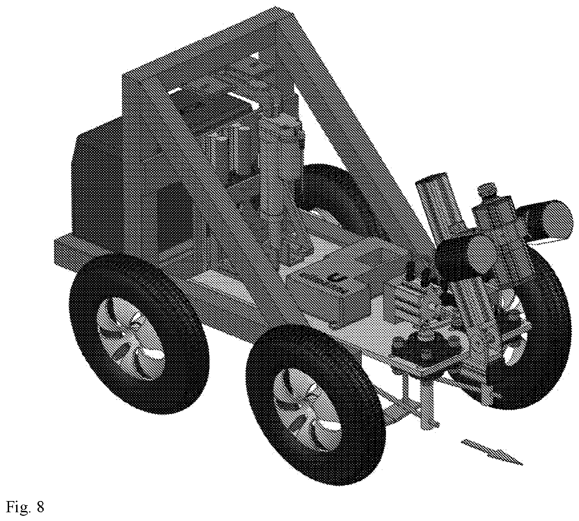

Once the SW is calibrated and the location, or detection, fields are defined, it is possible to proceed to the actual weeding. For the sake of simplicity, an example of a weeding machine will preferably be given that consists of only one independently movable weeding module as shown in Figure 8, fitted with a pair of clamped openable knives, which are positioned below ground level during weeding. Both knives have a blade and an arm, wherein the blades are controlled through the arm by a pneumatic cylinder or cylinders, making them to clamp and open. The starting position of the knives is clamped and the knives touch each other with the blade tips. The pneumatic cylinder or cylinders are connected to a computer and controlled by an evaluation software. The weeding machine is also equipped with a camera scanning the ground surface in front of the knives in the travel direction by a travel rate sensor and a height sensor. The weeding machine has a drive and wheels.

The weeding process

The calibrated or longitudinally preset weeding machine according to the procedure above is placed at the edge of the field with a crop sown/planted in rows. At the row edge, the weeder is roughly centered relative to the row axis and positioned so that the camera may scan the first plantlets in the row. The location field is either preset or preferably set according to the size of the plants being cultivated, or more precisely, according to the size of the diameter of their circular projection from above covering the whole crop leaves and according to the spacing of the individual crops in the row. Preferably, the detection field is defined or already preset according to the rules described above. According to the estimated root diameter of the crop, the size of the defined zone is also preset according to the rule described above. In the case of a towed or semi-towed weeder placed behind a tractor, the tractor with the weeder drives into the field and the weeder centers itself with respect to the row axis after a few meters according to the localized centers of the detected crops forming the row axis.

The weeding machine is activated and the drive starts to drive the weeding machine. At the same time, with the first movement of the weeding machine, the clamped weeding knives get below ground level, and the camera starts to scan the terrain. The weeding process itself is divided virtually into three lines - recording, location and contact.

**Within the recording line,** the camera records the ground surface and the crops in the row and sends the images to an evaluation SW.

**Within the location line,** the evaluation SW creates a cutout in the form of a predefined location field from each camera image, or from a preset frequency of images; and it further analyses this section. In the location field, the SW searches for the centers of the set crops using a machine-learning model that is trained to recognize the centers of a specific crop, e.g. sugar beet, maize, etc. Once the crop center has been detected and localized within the location field in the image, the identified center is validated by overlaying it with the detection field. Once the crop center has been localized within the detection field, the center position is used to calculate the time or distance remaining until the weeding knives make contact with the identified crop or the center thereof.

**Within the contact line,** the evaluation SW uses the information on current speed from a speed sensor of the weeding machine and on the location of validated crop centers from the location line to calculate the time and/or distance of the crop up to contact with the weeding knives or to create a virtual map with the localized centers of individual plants. The SW guides the weeding knives so that the knives move in a defined zone around the crop centers to ensure the tightest possible loosening without damaging the crop. When the weeding knives enter this defined zone, the SW instructs the clamped knives to come apart, and when the knives leave the defined zone, the SW instructs the knives to clamp back.

All these lines are linked in a cascade but shifted in time. First, an Image needs to be taken in the recording line, then the Image is evaluated in the location line, wherein the imaging continues in the recording line. In the contact line, the Image data is used to determine the time of contact between the knives and the crop from the Image and ensure that the weeding knives are open during contact.

The image evaluation procedure is repeated, and the identified crop positions are also used to center the weeding machine relative to the row axis.

If the crops in one row have a spacing greater than the shortest distance of the knives from the nearest edge of the location field, the sequence of lines is consecutive:

**Within the recording line,** the camera will record the ground surface and the crops in the row and sends the images to an evaluation SW.

**Within the location line,** the evaluation SW determines the location field on the images, and detects and localizes the crop center therein, which it validates by overlaying the identified center with the detection field.

**Within the contact line,** the evaluation SW uses the location information of the validated crop centers from the location line to calculate the time and/or distance of the given crop up to the contact with weeding knives; and only after contacting the crop and the weeding knives, the sequence repeats - by recording the next image, detecting and localizing the next crop center and contacting the crop with the weeding knives.

If the crops in one row are spaced less than the shortest distance of the knives from the nearest edge of the location field, weeding automation is performed in multiple lines simultaneously because the camera on the moving weeding machine is already scanning the second crop in the row and the knives have not yet come into contact with the first crop detected.

**Within the recording line,** the camera will record the ground surface and the crops in the row and sends the images to an evaluation SW.

**Within the location line,** the evaluation SW determines the location field on the images, and detects and localizes the crop center therein, which it validates by overlaying the identified center with the detection field.

**Within the contact line,** the evaluation SW uses the information on location of the validated crop centers from the location line to calculate the time and/or distance of the given crop up to the contact with the weeding knives. The SW keeps this information and counts down the time and/or distance up to knife contact with the crop in relation to the current travel rate of the weeding machine, while in parallel with this countdown, the SW localizes the next crop in the row within the **location line.**

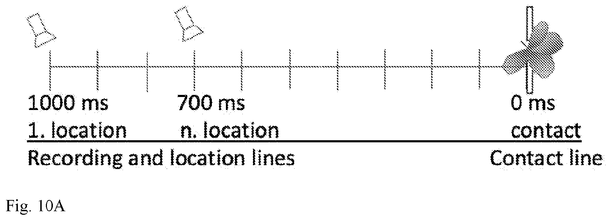

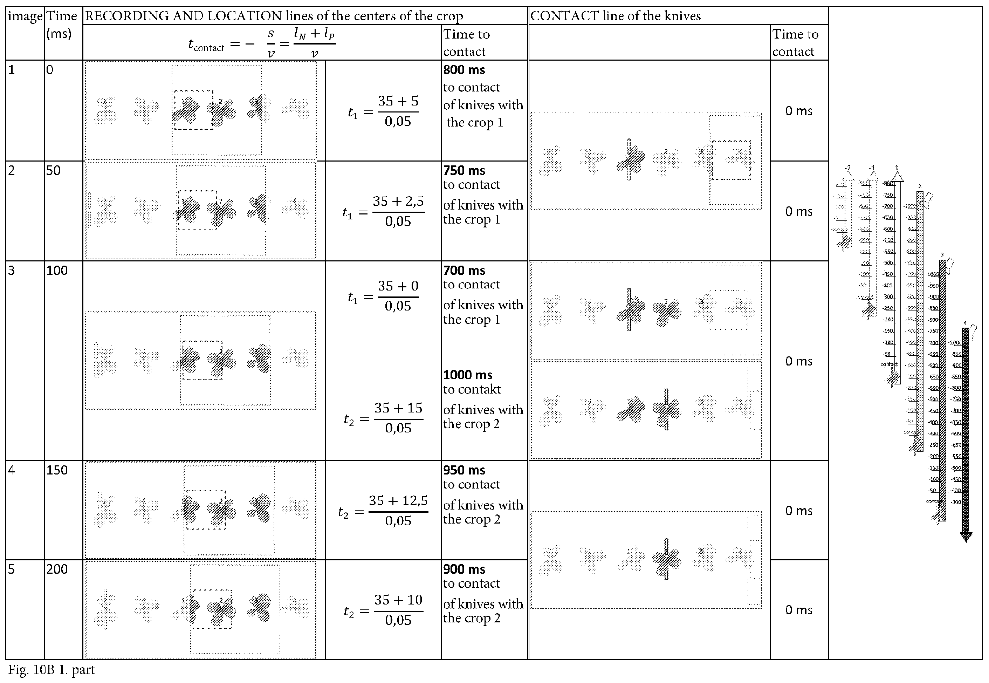

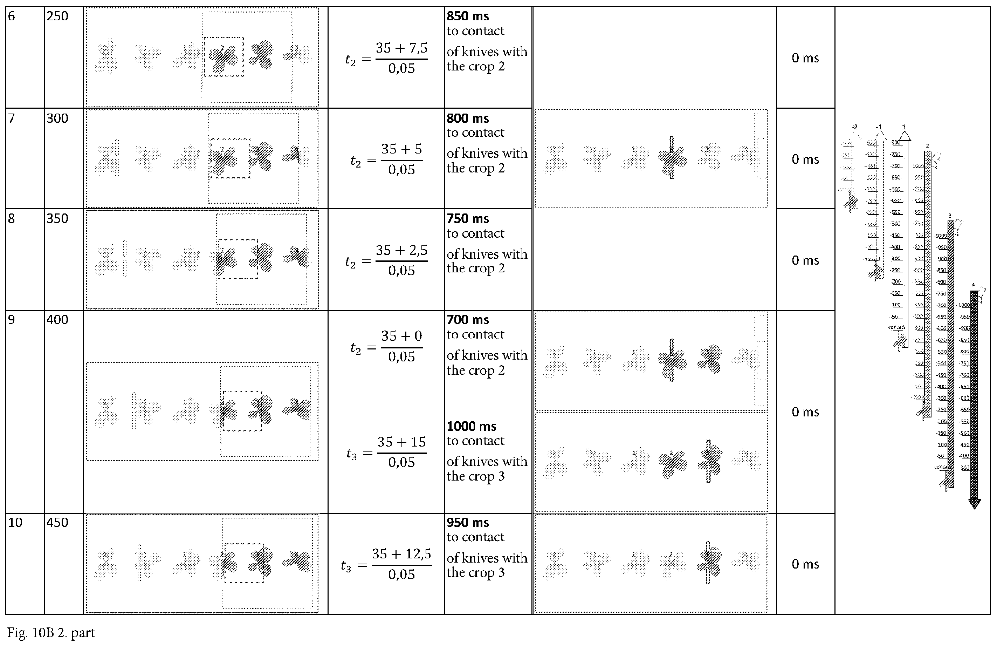

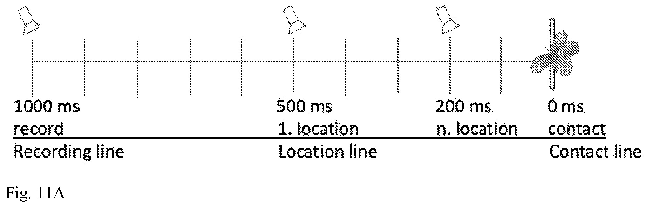

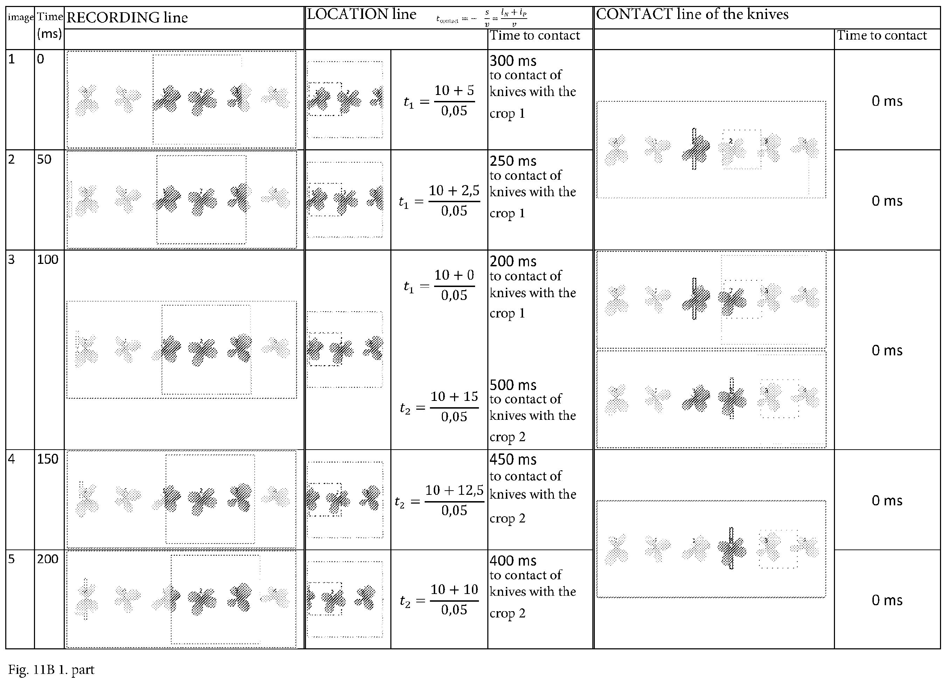

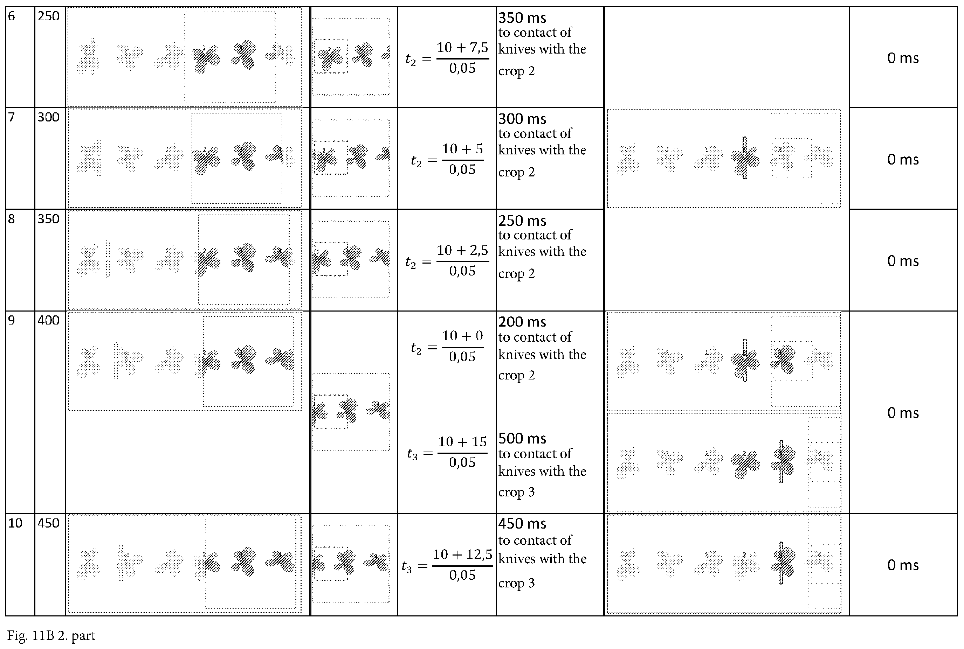

Figures 10A and 10B, 11A and 11B show the evaluation procedure. Figures 10A and 10B show a variation where the crop center is detected immediately after the image is taken, i.e., at the exposure time. Then the recording and location lines are interconnected. Figures 11A and 11B show a variant where the evaluation of the image is delayed beyond the acquisition thereof, i.e. the recording and location lines are separated in time.

The whole process of automatic weeding described above can be generalized as follows:

Method of intra-row weeding of agricultural crops

by means of a moving weeding machine
provided with

a camera to scan the weeding area;
software equipped to recognize the crop being cultivated alongside other crops or weeds;
further provided with knives,

positioned in the space or behind the space scanned by the camera in the direction of the weeding machine movement,
which are positioned below the ground level,
and are withdrawable from the axis of the line or openable
and loosen the entire row up to the immediate vicinity of the crops, is characterized in that

the camera's field of view is calibrated,
wherein the sides of the camera's field of view are at least the same length as spacing of the crops being cultivated
and the weeding machine is set in motion and moves parallel to the row axis (o) ± 10%, the camera takes images of the field of view at intervals,
which are stored in the evaluation software,
evaluation software,

which contains a machine learning model trained to recognize the centers of agricultural crops being cultivated,
analyzes images of the calibrated camera's field of view,
where it detects and localizes centers of agricultural crops being cultivated using the machine learning model,
and records the positions of the detected and localized centers,

a defined zone is defined around the recorded localized centers in the immediate vicinity of the crops, where the knife edges move,

that are closest to the localized center of the crop,
wherein the knives are positioned horizontally, attached to the arms, and the arms are attached to the weeding machine,
wherein a distance between the knife attachment to the arm and the knife edge corresponds to at least $r_{15}$ - $r_K$ - 1 cm,

where $r_{15}$ is the radius of the circular projection from above covering the entire leaf rosette of the agricultural crops being cultivated,
and $r_K$ is the root radius of the crop being cultivated,

the defined zone shall be defined between

a circle of radius (r) having center at the detected crop center
a square having center at the detected crop center,

wherein the radius of the circle (r) is equal to the radius ($r_K$) of the root of the crop being cultivated + 1 cm
and the square has a side length of 2r + 4 cm,

before the knives entering the defined zones, they are

got down with at each other
and centered on the row axis $\pm$ 10%,

and when the knives enter the defined zones
the evaluation software commands the knife edges to come temporarily apart within the defined zone,
and at the latest when the knives leave the defined zones
the evaluation software commands the knives to clamp back.

Preferably, the evaluation software commands the knife edges to come temporarily apart within the defined zone at the square edge at the earliest, and at the circle edge at the very latest within the defined zone in the direction of the weeding machine travel, wherein the knife is attached to the arm through a horizontal knife extension.

Preferably, a standard is scanned into the camera's field of view at least at two different heights to calibrate the spatial distortion of the field of view (9) of the camera (8). The height of the center of the camera lens above ground level is preferably entered into the evaluation software. Preferably, any definable height or distance of the defined feature from the ground is specified, wherein the calibration object is preferably flat, has a negligible height, and includes patterns or markings. Preferably, a calibration pattern on a paper or plate is used. Preferably, however, the camera is a 3D stereo surround camera.

Preferably, the field of view is defined in a rectangle or square shape, and the location field is defined in the same size as the size of the field of view, and the field of view and the location field overlap. Preferably, the location field is then defined smaller than the field of view and also in the shape of a rectangle or square. Preferably, the location field and the field of view are defined with at least one matching edge, wherein the matching edge being the closest edge of the field of view to the knives. Preferably, the length of the location field in the direction of the weeding machine travel is defined to be the same or shorter than the spacing between the individual crops in one row.

Preferably, a detection field smaller than the location field is defined within the location field and the crop center localized within the location field is validated by overlapping with the detection field. Preferably, the detection field length in the direction of the weeding machine travel and the detection field width are then defined for crops with a circular projection from above covering the entire crop leaves less than 8 cm to a maximum of *d - 2 cm,* where *d* is the spacing between the individual crops in one row, i.e. for crops with a circular projection from above covering the entire crop leaves less than 8 cm to a maximum of 13 cm. Preferably, the detection field length in the direction of the weeding machine travel and the detection field width are defined for crops with a circular projection from above covering the entire crop leaves higher than 8 cm to a maximum of *d - 5 cm,* where *d* is the spacing between the individual crops in one row, i.e. for crops with a circular projection from above covering the entire crop leaves higher than 8 cm to a maximum of 10 cm.

Preferably, a regular interval of field of view image taking is 10 to 100 frames per second.

In addition to the simple single-module weeding machine model used to explain the weeding method above, a multi-module weeding machine can also be used for the weeding method described. In this case, each weeding module has preferably its own camera and its own computer with evaluation SW. In another preferred embodiment, the multi-module weeding machine has only one camera that captures the growing surface, the rows, in front of all modules at once, or multiple cameras that capture multiple rows at once. Similarly, the computer with the evaluation SW can be only one for multiple weeding modules.

The weeding machine, or individual weeding modules, can be fitted with a drive and wheels, and they can move independently, or they can be towed or semi-towed behind a tractor or other agricultural machine giving them momentum. Towed modules do not include support wheels, semi-towed models include support wheels. Both modules may include all-terrain wheels to monitor the height of the weeding machine above the ground and to secure the position of the weeding knives below the ground. Preferably, the towed modules are mounted fixedly to the towing device in the travel direction and movably perpendicular to the travel direction, i.e. sideways, so that the trajectory of the individual modules can be corrected and centered, or their knives can be centered with respect to the row axis.

The weeding module includes weeding knives, wherein each module has at least two weeding knives. In the case the weeding blades are placed on the module in pairs, as in the case of the simple weeding machine model above, the paired knives are centered with respect to the row axis, wherein there is a maximum gap of 1cm between the blade tips, or between the knife edges in general. Preferably, the knife tips are in contact or there is a gap of no more than 0.5 cm between them to ensure perfect soil loosening. The gap width also depends on the weeding speed of the given weeding machine. If the weeding machine is to be used for high-speed weeding, the gap can be increased. The dependence of the gap size on the weeding speed is continuous and can be described in such a way that at a speed of 0.5 m/s, the gap can be at most 1 cm, at 1 m/s, the gap can be at most 2 cm, at 2.5 m/s the gap can be at most 5 cm. This dependence is due to the kinetic energy transmitted by the knife blades to the soil, which, in addition to the mechanical loosening of the soil by the knives, contributes to the loosening of the soil. Of course, the dependence is also determined by the properties of the loosened soil and the blade shape.

The same rules for the distance between the tips of the knife blades also apply when the knives are not placed in pairs facing each other, but are placed behind or above each other. However, if the knives are placed above or below each other, the knives are preferred to overlap at least partially: when placed above each other, projecting from above and when placed behind each other, projecting from the front or rear.

The blade shapes of the weeding knives also plays a role in the quality of soil loosening and weeding. The blades can be of various thicknesses and shapes. It does not even have to be a typical blade shape, but for example a weeding foot. The width of the lowered knives is preferably equal to or higher than the width of the row. If it is the same, weeding occurs in the immediate vicinity of the crops and the entire row. If it is higher, weeding occurs in the immediate vicinity of the crops, the entire row as well as the inter-row. There may also be cases where the width of the lowered knives is less than the row width - then, the weeding occurs in the immediate vicinity of the crops, which is the most critical and important part of the weeding. The remaining area of the row can then be weeded out by non-smart weeding machines of the state of the art.

The knives are connected to the arms and are withdrawable from the row axis by means of an openable and clamping mechanism, preferably a joint or a piston. The knives movement is driven by a drive, which is preferably hydraulic, electric or pneumatic.

In general terms, the weeding machine for performing the method can be described as follows:
Movable weeding machine

provided with knives,
which are positioned below the ground level in the working position and are able to come apart from each other and from the row axis and loosen the entire row up to the immediate vicinity of the crops, further provided with a camera to scan the weeding area;

for weeding according to the method of claim 1, characterized in that it contains at least one weeding module

provided with at least one pair of knives

centered on the row axis $\pm$ 10%,
wherein the knives are positioned horizontally, attached to the arms, and the arms are attached to the weeding machine,
wherein a distance between the knife attachment to the arm and the knife edge corresponds to at least $r_{15}$ - $r_K$ - 1 cm,

where $r_{15}$ is the radius of the circular projection from above covering the entire leaf rosette of the agricultural crops being cultivated,
and $r_K$ is the root radius of the crop being cultivated,

the knives are positioned in the space or behind the space scanned by the camera in the direction of the weeding machine movement,

and further comprising at least one computer with evaluation software having a machine learning model trained to recognize centers of the crops being cultivated.

The shortest mutual distance of the lowered knives in a pair is preferably 0 to 1 cm. The knives are able to come apart from the row axis using a joint or a piston on the arm and are driven by a drive that is hydraulic, electric and/or pneumatic. Preferably, the knives are of the hoe or plough or rake or finger or blade or disc type. Preferably, the camera is a 3D stereo surround camera, and the weeding machine is preferably provided with at least one all-terrain wheel fitting closely to the ground level.

Explanation of Drawings

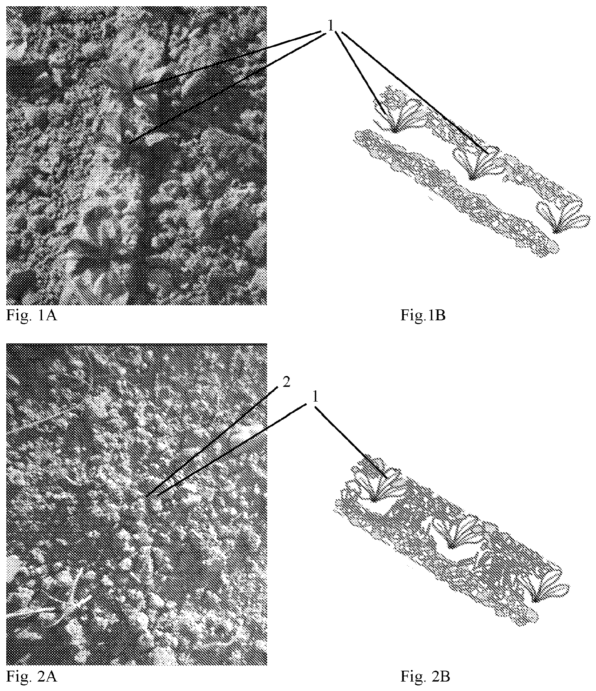

Fig. 1A: A row weeded out according to the state of the art, leaving an not-loosened band of soil between the crops in the row;

Fig. 1B: A row weeded out according to the state of the art, leaving an not-loosened band of soil between the crops in the row; drawing;

Fig. 2A: A row weeded out according to the weeding method of the present invention, the soil is loosened even between the crops in the row;

Fig. 2B: A row weeded out according to the method of the present invention, the soil is loosened even between the crops in the row; drawing;

Fig. 3A: Drawing of the situation during weeding, definition of terms, row;

Fig. 3B.1: Drawing of the situation during weeding, definition of terms, field of view and location field, row axis;

Fig. 3B.2: Drawing of the situation during weeding, definition of terms, field of view and location field, detection field for small plantlets of projection of up to 8 cm, the localized center of the plantlet is overlapped with the detection field and is, therefore, validated;

Fig. 3B.3: Drawing of the situation during weeding, definition of terms, field of view and location field, detection field for small plantlets of projection of up to 8 cm, neither localized center of the plant is overlapped with the detection field and, therefore, not validated and not used to calculate the remaining time or distance to contact of the weeding knife with the plantlet;

Fig. 3B.4: Drawing of the situation during weeding, definition of terms, field of view and location field, detection field for large plants with a projection higher than 8 cm;

Fig. 3C: Drawing of the situation during weeding, definition of terms, defined zone, small crop;

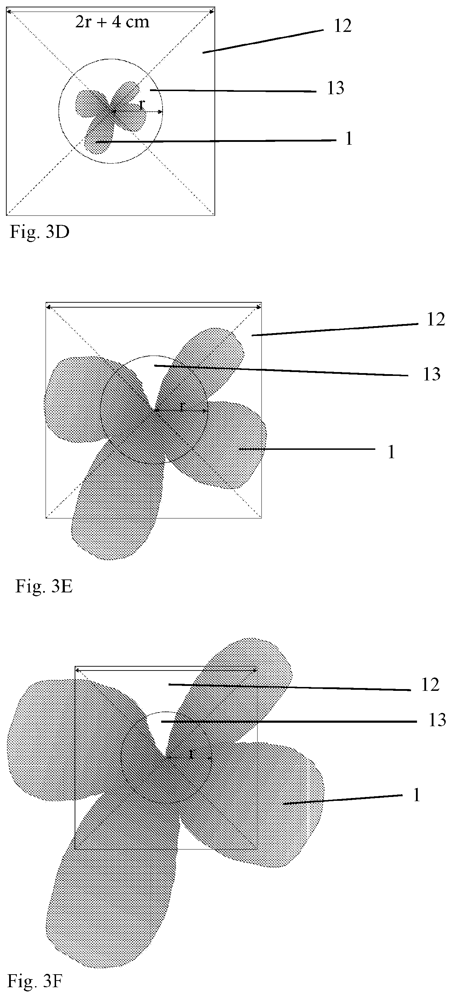

Fig. 3D: Drawing of the situation during weeding, definition of terms, defined zone, small crop;

Fig. 3E: Drawing of the situation during weeding, definition of terms, defined zone, larger crop, leaves partially overlapping the defined zone;

Fig. 3F: Drawing of the situation during weeding, definition of terms, defined zone, large crop with leaves overlapping the defined zone;

Fig. 4A: Drawing of the situation during weeding, movement of the knives in the defined zone, small crop;

Fig. 4B: Drawing of the situation during weeding, movement of the knives in the defined zone, sequence, small crop;

Fig. 4C.1: Drawing of the situation during weeding, preferable patterns of knife movement in the defined zone, case with a gap between the tips of the lowered knives, movement around the square perimeter;

Fig. 4C.2: Drawing of the situation during weeding, preferable patterns of knife movement in the defined zone, case with a gap between the tips of the lowered knives, movement around the circle;

Fig. 4C.3: Drawing of the situation during weeding, preferable patterns of knife movement in the defined zone, case with a gap between the tips of the lowered knives, movement around the rhomboid perimeter;

Fig. 4C.4: Drawing of the situation during weeding, preferable patterns of knife movement in the defined zone, case with a gap between the tips of the lowered knives, movement around the square perimeter, one knife is placed in front of the other one, thus the second knife is delayed;

Fig. 4C.5: Drawing of the situation during weeding, preferable patterns of knife movement in the defined zone, case without a gap between the tips of the lowered knives, movement around the square perimeter;

Fig. 4C.6: Drawing of the situation during weeding, preferable patterns of knife movement in the defined zone, case without a gap between the tips of the lowered knives, movement around the circle;

Fig. 4C.7: Drawing of the situation during weeding, preferable patterns of knife movement in the defined zone, case without a gap between the tips of the lowered knives, movement around the rhomboid perimeter;

Fig. 4C.8: Drawing of the situation during weeding, preferable patterns of knife movement in the defined zone, case without a gap between the tips of the lowered knives, movement around the square perimeter, one knife is placed in front of the other one, thus the second knife is delayed;

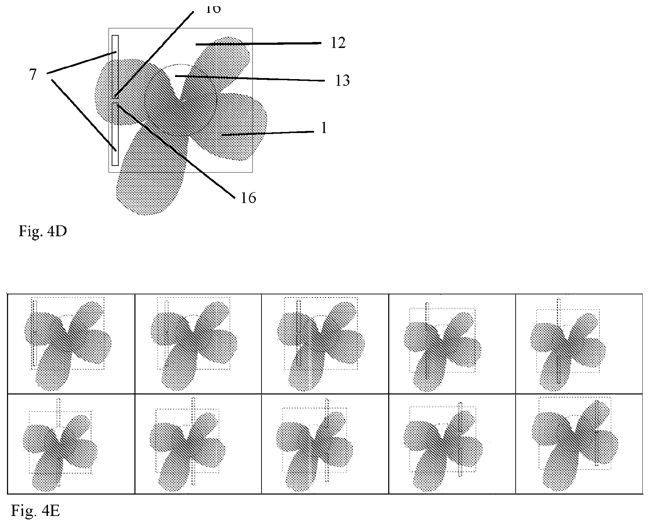

Fig. 4D: Drawing of the situation during weeding, movement of the knives in the defined zone, larger crop;

Fig. 4E: Drawing of the situation during weeding, movement of the knives in the defined zone, sequence, larger crop;

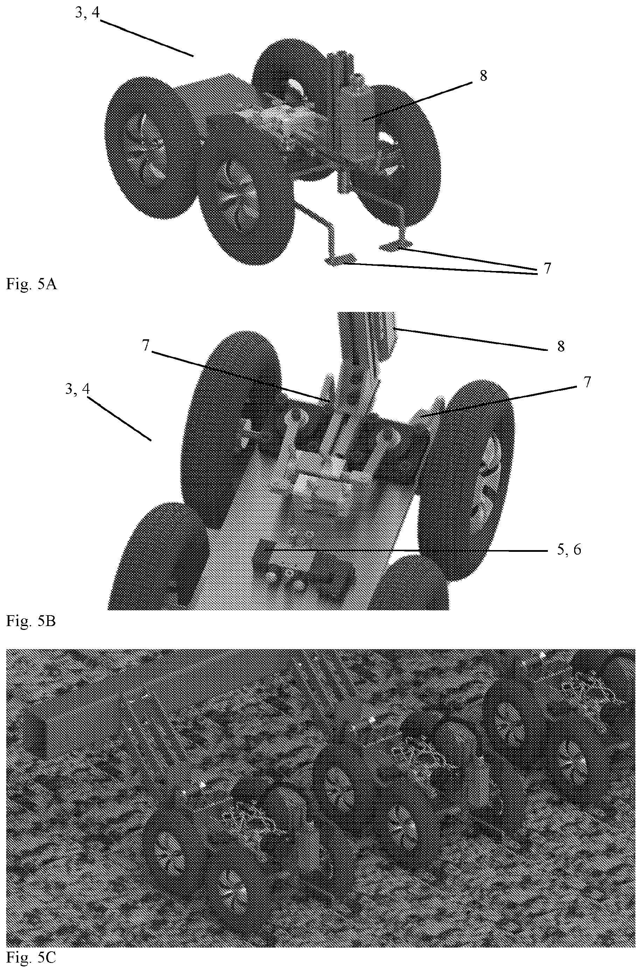

Fig. 5A: A weeding machine for carrying out the weeding method of the present invention; single-module with four wheels and self-drive; a camera positioned perpendicular to the growing surface; knives placed in pairs in the camera's field of view; front side view;

Fig. 5B: A weeding machine for carrying out the weeding method of the present invention; single-module with four wheels and self-drive; a camera positioned perpendicular to the growing surface; knives placed in pairs in the camera's field of view; top view;

Fig. 5C: A weeding machine for carrying out the weeding method of the present invention, comprising the three modules of FIG. 5A; front side view;

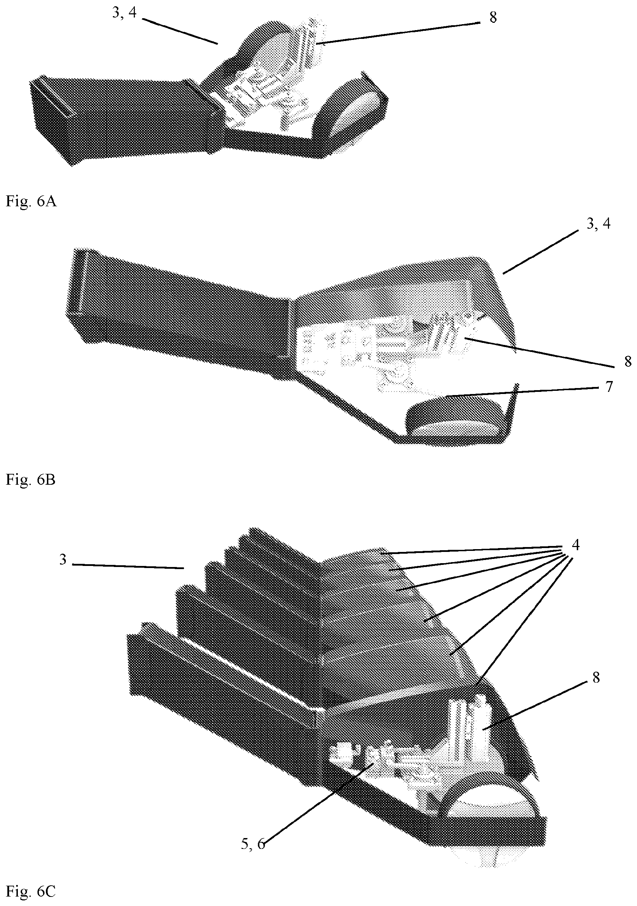

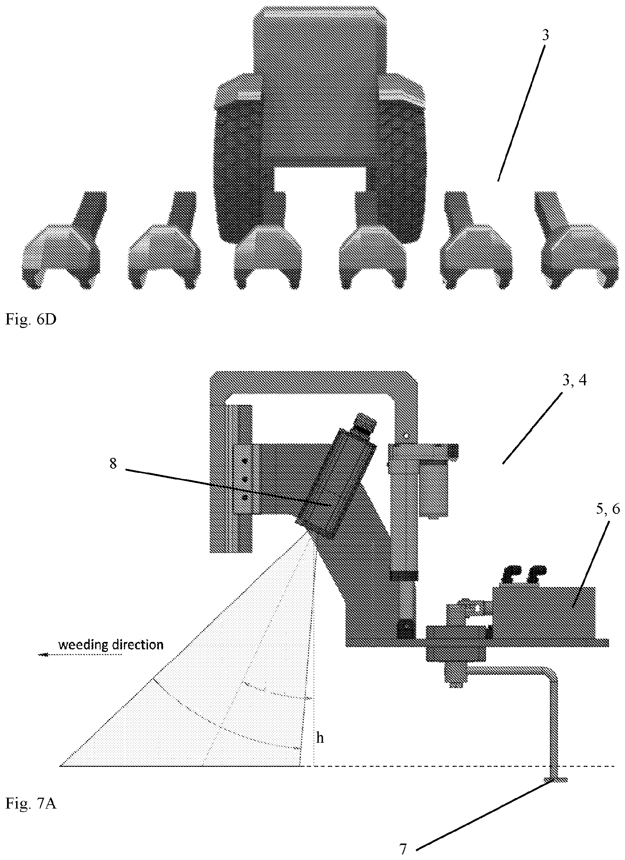

Fig. 6A: A weeding machine for carrying out the weeding method of the present invention; single-module with two wheels; towed; without self-drive; a camera positioned perpendicular to the growing surface; knives placed in pairs in the camera's field of view; rear side view;

Fig. 6B: A weeding machine for carrying out the weeding method of the present invention; single-module with two wheels; towed; without self-drive; a camera positioned perpendicular to the growing surface; knives placed in pairs in the camera's field of view; side view;

Fig. 6C: A weeding machine for carrying out the weeding method of the present invention, comprising the six modules of FIG. 6A; side view;

Fig. 6C: A weeding machine for carrying out the weeding method of the present invention, comprising the six modules of FIG. 6A; front side view of weeding modules; behind the tractor;

Fig. 7A: A weeding machine for carrying out the weeding method of the present invention; single-module without wheels; towed; without self-drive; a camera faces to the front of the weeding machine obliquely to the growing surface; knives placed in pairs behind the camera's field of view; side view;

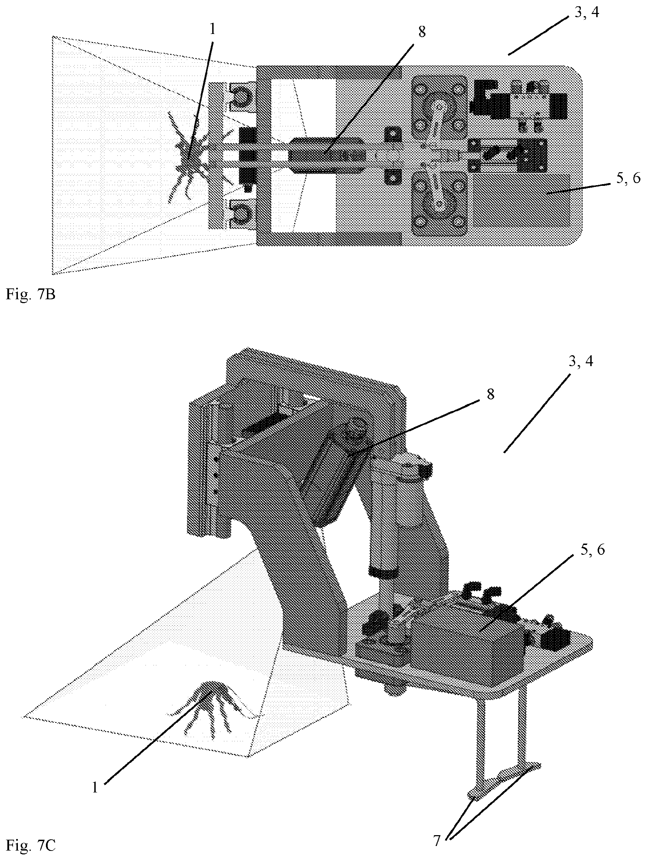

Fig. 7B: A weeding machine for carrying out the weeding method of the present invention; single-module without wheels; towed; without self-drive; a camera faces to the front of the weeding machine obliquely to the growing surface; knives placed in pairs behind the camera's field of view; top view with the crop in the camera's field of view;

Fig. 7C: A weeding machine for carrying out the weeding method of the present invention; single-module without wheels; towed; without self-drive; a camera faces to the front of the weeding machine obliquely to the growing surface; clamped knives placed in pairs behind the camera's field of view; rear side view with the crop in the camera's field of view;

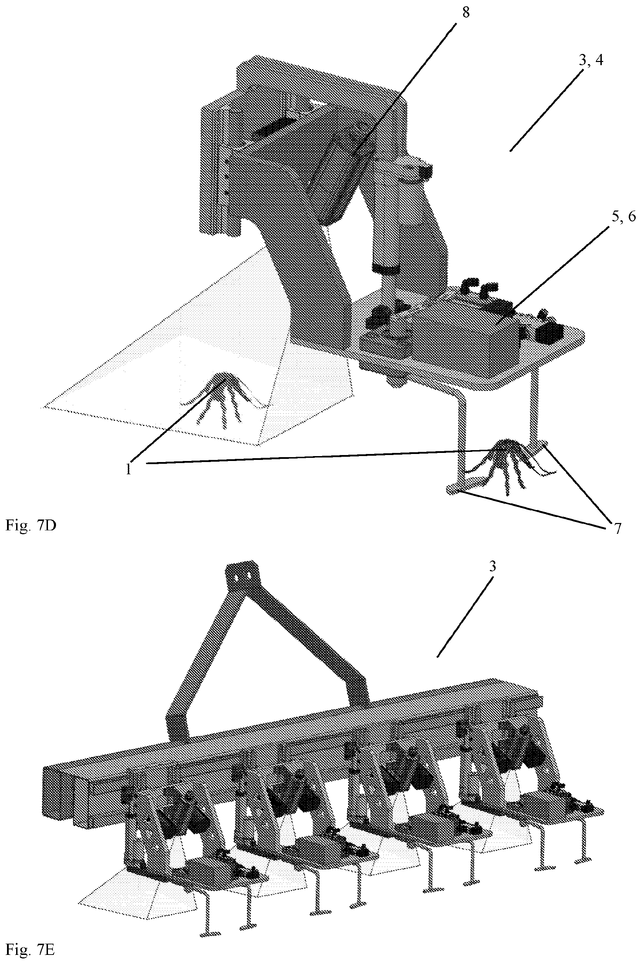

Fig. 7D: A weeding machine for carrying out the weeding method of the present invention; single-module without wheels; towed; without self-drive; a camera faces to the front of the weeding machine obliquely to the growing surface; open knives placed in pairs behind the camera's field of view circle the crop within the defined zone; rear side view with the crop in the camera's field of view;

Fig. 7E: A weeding machine for carrying out the weeding method of the present invention, comprising the four modules of FIG. 7A; front side view of weeding modules;

Fig. 8: A one-module weeding machine for carrying out the weeding method of the present invention, according to Example 1; front side view;

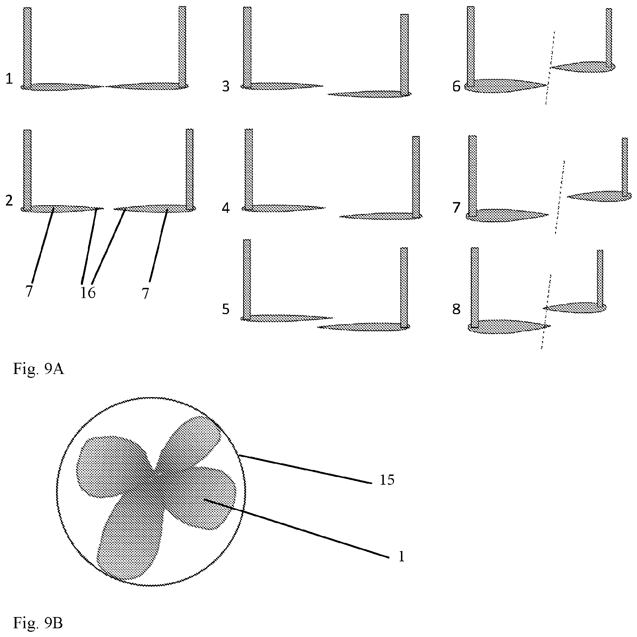

Fig. 9A.1: Two weeding knives placed in a pair; without gap between the knife tips; view from the blade plane

Fig. 9A.2: Two weeding knives placed in a pair; with a gap between the knife tips; view from the blade plane

Fig. 9A.3: Two weeding knives placed in a pair above each other. without gap between the knife tips; view from the blade plane;

Fig. 9A.4: Two weeding knives placed in a pair above each other; with a gap between the knife tips; view from the blade plane;

Fig. 9A.5: Two weeding knives placed in a pair above each; with horizontal overlap of the knife tips; view from the blade plane;

Fig. 9A.6: Two weeding knives placed in a pair behind each other; without gap between the knife tips; perspective view with the row axis marked;

Fig. 9A.7: Two weeding knives placed in a pair behind each other; with a gap between the knife tips; perspective view with the row axis marked;

Fig. 9A.8: Two weeding knives placed in a pair behind each other; with horizontal overlap of the knife tips; perspective view with the row axis marked;

Fig. 9B: Definition of terms, circular projection from above covering the entire crop leaves;

Fig. 10A: Drawing of the situation during weeding for Figure 9B;

Fig. 10B: Summary of the situation during weeding according to examples 1 and 2;

Fig. 11A: Drawing of the situation during weeding for Figure 10B;

Fig. 11B: Summary of the situation during weeding according to examples 1 and 2;

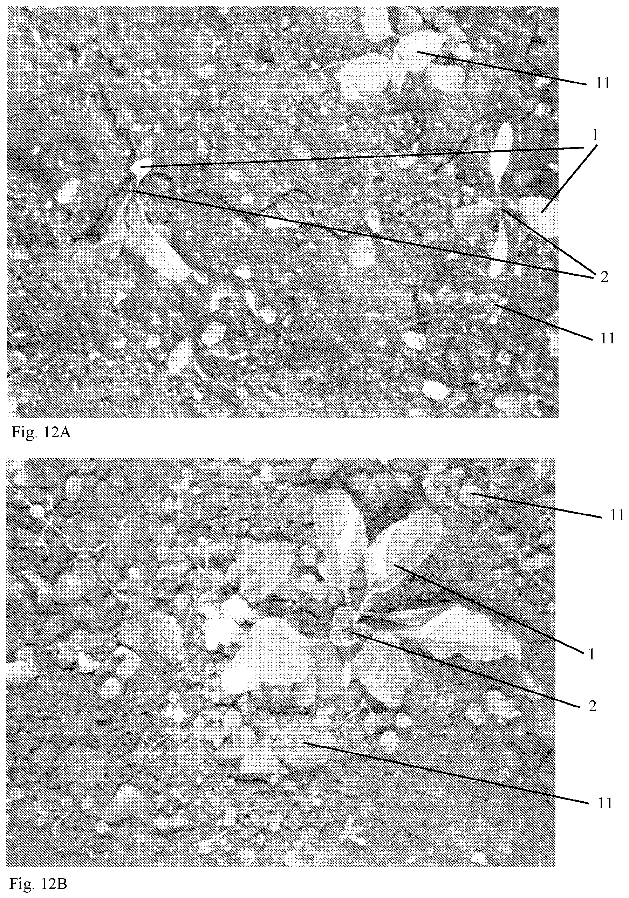

Fig. 12A: A field of view taken by a camera mounted on the weeding machine for carrying out the method of the present invention; the crop being sugar beet;

Fig. 12B: A field of view taken by a camera mounted on the weeding machine for carrying out the method of the present invention; the crop being sugar beet;

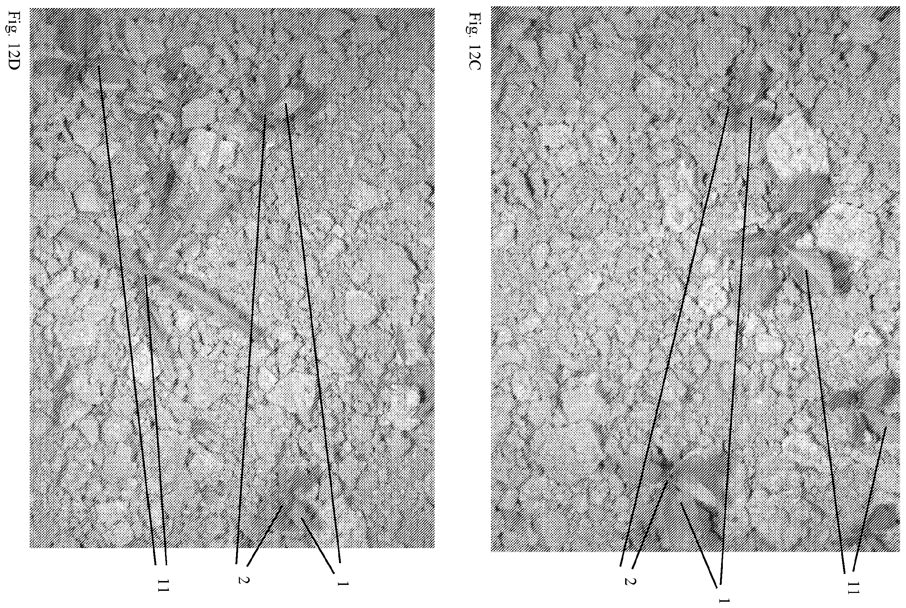

Fig. 12C: A field of view taken by a camera mounted on the weeding machine for carrying out the method of the present invention; the crop being sugar beet;

Fig. 12D: A field of view taken by a camera mounted on the weeding machine for carrying out the method of the present invention; the crop being sugar beet;

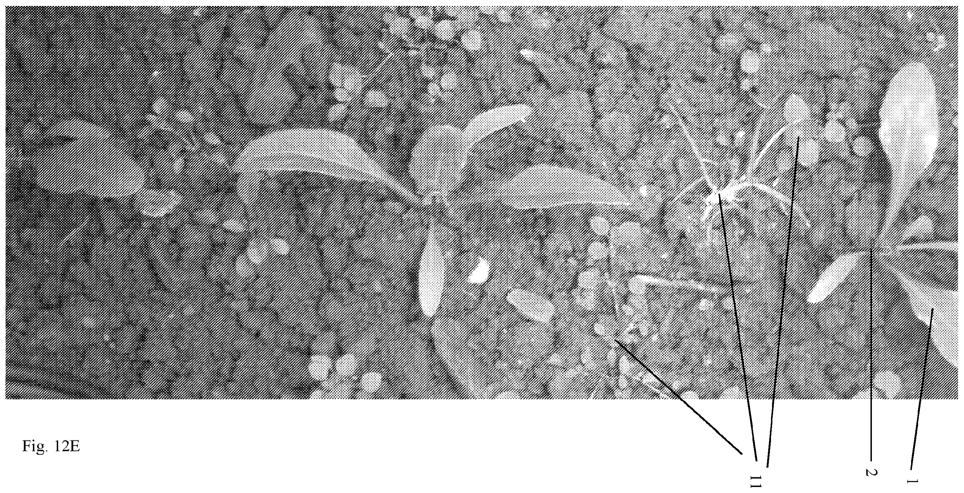

Fig. 12E: A field of view taken by a camera mounted on the weeding machine for carrying out the method of the present invention; the crop being sugar beet;

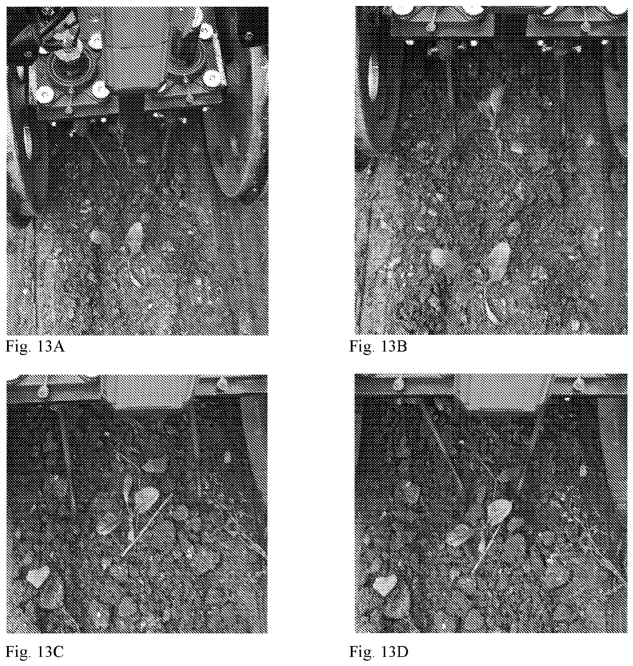

Fig. 13A: Photograph of weeding process by the weeding machine according to Fig. 5A; clamped knives between crops in the row;

Fig. 13B: Photograph of weeding process by the weeding machine according to Fig. 5A; opening knives around crop in the row;

Fig. 13C: Photograph of weeding process by the weeding machine according to Fig. 5A; open knives around the crop in the row;

Fig. 13D: Photograph of weeding process by the weeding machine according to Fig. 5A; clamping knives between crops in the row;

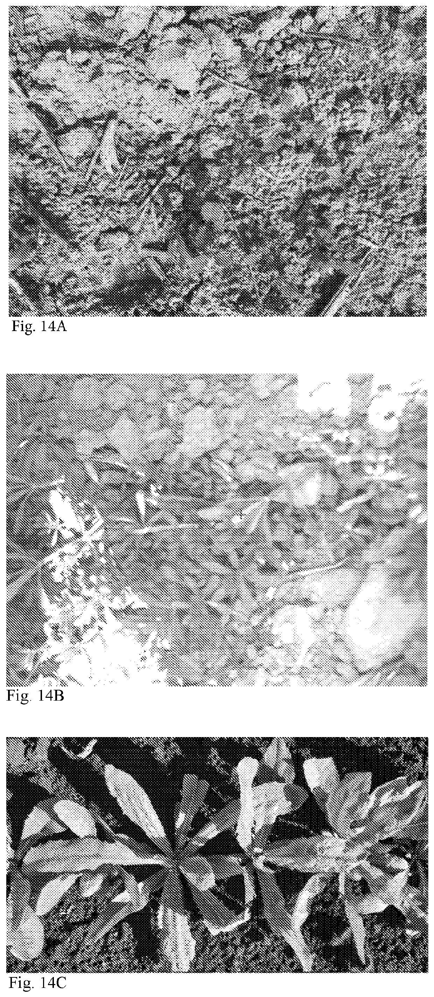

Fig. 14A: A field of view taken by a camera mounted on the weeding machine for carrying out the method of the present invention; the crop being chicory; crop detection within overgrown weeds;

Fig. 14B: A field of view taken by a camera mounted on the weeding machine for carrying out the method of the present invention; the crop being chicory; crop detection within overgrown weeds;

Fig. 14C: A field of view taken by a camera mounted on the weeding machine for carrying out the method of the present invention; the crop being chicory; crop detection within overgrown weeds;

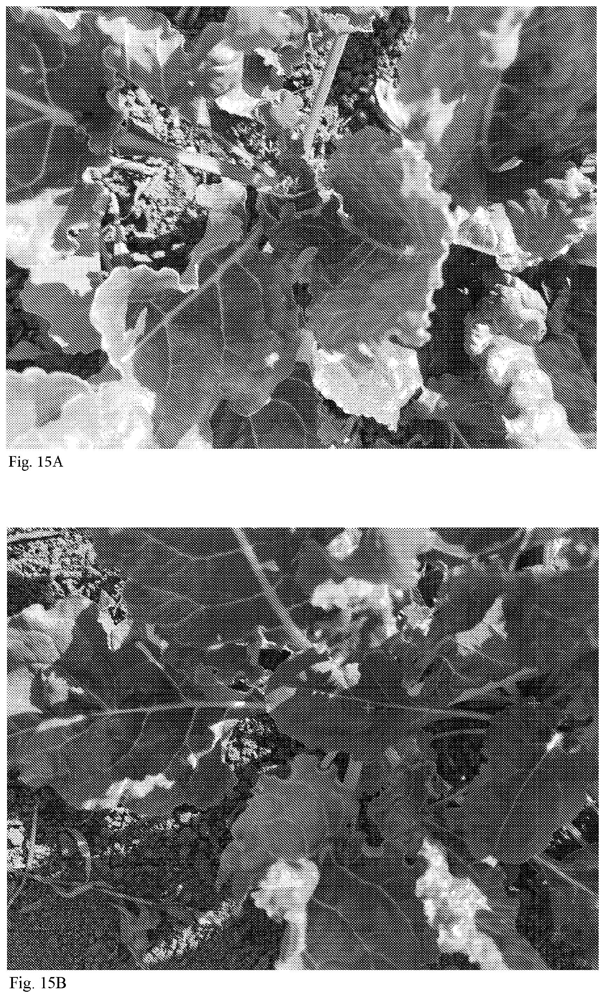

Fig. 15A: A field of view taken by a camera mounted on the weeding machine for carrying out the method of the present invention; the crop being sugar beet; detection of a crop having leaves overlapping the crop center;

Fig. 15B: A field of view taken by a camera mounted on the weeding machine for carrying out the method of the present invention; the crop being sugar beet; detection of a crop having leaves overlapping the crop center;

Examples of Invention Embodiments

Example 1 Single-module weeding machine on wheels with self-drive; camera facing in front of the weeding machine; knives are placed behind the camera's field of view in the direction of the weeding machine travel - a small robot, field of view 30 × 30 cm, location field 15 × 15 cm, detection field 13 × 13

The weeding machine 3 consists of one independently movable weeding module 4 as shown in Figure 8, fitted with a pair of clamped openable knives 7 positioned below ground level during weeding. Both knives 7 have a blade and an arm, wherein the blades are controlled through the arm by a pneumatic cylinder, making them to clamp and open. The starting position of the knives 7 is clamped and the knives touch each other with the blade tips. The pneumatic cylinder is connected to the computer 5 with evaluation SW 6 and controlled by the evaluation SW 6. The weeding machine 3 is further provided with a camera 8 scanning the ground surface in front of the knives 7 in the direction of the weeding machine 3 travel, wherein the camera 8 is inclined forwardly in front of the weeding machine 3 at an angle of 25.5°. In addition, the weeding machine 3 is provided with a height sensor. The weeding machine 3 has its own drive and four wheels.

Before use, the weeding machine 3 is calibrated as follows:
The calibration is carried out on a plane by placing a calibration object, which is a paper sheet of size of 30 × 30 cm and of negligible height on the ground, i.e. at ground level, in the area to be scanned by the camera 8 of the weeding machine 3. The dimensions of the paper sheet and height h of the center of the camera lens 8 above ground level at the time of calibration are then entered into SW 6. As a result, SW 6 is able to process the image from camera 8, or a series of captured images, in real dimensions. Since the camera 8 does not point perpendicular to the ground but is inclined forwardly in front of weeding machine 3, the calibration also corrects the spatial distortion of the image. The result of the calibration is an undistorted image of a square-shaped field of view measuring 30 × 30 cm, wherein the shortest distance of field of view 9 from knives 7, created by an imaginary perpendicular line from the edge of field of view 9 to knives 7, is 30 cm.

Furthermore, a virtual location field 10 is defined for SW 6, where SW 6 will detect and localize crops 1 during weeding. The location field 10 is defined as a cutout of the field of view 9 of the camera 8, wherein the location field 10 is defined as a 15 × 15 cm square, centered with respect to the longitudinal axis of the field of view 9 in the direction of the machine weeding 3 travel and offset from the edge of the field of view 9, which is the closest to the knives 7, by 5 cm. Then, the shortest distance of the location field 10 from the knives 7, created by an imaginary perpendicular line from the edge of the location field 10 to knives 7, which is 35 cm, is entered into SW 6. The position of the location field 10 within the field of view 9 is fixed and, thus, the distance of the edge of the location field 10 from the knives 7 is fixed and unchanging during weeding. Then, a detection field 14 is defined within the location field 10. Since the field to be weeded out is a field of tiny sugar beet plantlets aged about 3 weeks, wherein the individual plantlets have a circular projection from above covering the entire leaves of the plant with a diameter of 7 cm, the detection field 14 was set to a square of 13 × 13 cm. The detection field 14 has been centered in the location field 10.

A defined zone 12 around the plants was also defined, which is bounded on the outside by a square of side length $2r + 4\,cm$ and on the inside by a circle of radius $r$. The defined zone 12 is preset with respect to the estimated root diameter of the cultivated plants of 0.3 cm to $r = 0.15\,cm + 1\,cm$.

The weeding machine 3, calibrated and set up in this way, is placed on the edge of the field sown with sugar beet, roughly centered on the row edge with respect to the row axis o and positioned so that the camera 8 may capture the very first plantlet in the row. The sugar beet plantlets are sown in rows with a spacing of 15 cm and a row spacing of 45 cm. Weeds grow among the sugar beet plantlets, suppressing the plantlets and taking away their moisture and nutrients; the weeds will then be weeded out.

Therefore, the weeding machine 3 is activated and the drive starts to drive the weeding machine 3. At the same time, with the first movement of the weeding machine 3, the clamped weeding knives 7 get below ground level, and, in the *recording line,* the camera 8 starts to scan the terrain at a rate of 60 frames per second. The images from the camera 8 are uploaded to the SW 6, wherein, *in the location line,* the SW 6 creates a cutout in the form of a defined location field 10 from each image of the field of view 9 of the camera 8, which is further analyzed, wherein the SW 6 searches for the centers 2 of the plants within the location field 10 using a machine learning model trained to recognize crop centers. Once the crop center 2 has been detected and localized within the location field 10 in the image, the identified center 2 is validated by overlaying it with the detection field 14. Once the identified plant center 2 has been localized within the detection field 14, the center 2 is considered validated and the position thereof is used in the *contact line* to calculate the time or distance remaining until the weeding knives 7 contact that identified plantlet or, more precisely, the center 2 thereof, wherein the time and/or distance up to contact is counted down. In this particular case, the SW 6 calculates the time remaining until the knives 7 contact the plantlet depending on the current travel speed of the weeding machine 3 according to the formula:

$$t_{kontakt} = -\frac{s}{v} = \frac{l_N + l_P}{v}$$ where $t$ is time; $s$ is the trajectory; $v$ is the current speed; $l_N$ is the distance of knives 7 from the edge of the location field 10, constant for a given weeding (35 cm); $l_P$ is the distance of the edge of the location field 10 and the center of the 2 crop. The current speed of the weeding machine is evaluated by SW 6 from the displacement of successive images of the field of view 9 of the camera 8.

The SW 6 guides the weeding knives 7 so that the knives 7 move in a defined zone 12 around the crop centers 2 to ensure the tightest possible loosening without damaging the plantlet. When the weeding knives 7 enter this defined zone 12, the SW 6 instructs the clamped knives 7 to come apart, and when the knives 7 leave the defined zone 12, the SW instructs the knives to clamp back 7. The knives move around the perimeter of a rhomboid within the defined zone 12.

All these lines are linked in a cascade but shifted in time. The time offset is equal to the ratio of the distance $s$ of the detected crop center 2 and the current speed $v$, i.e. $t = l/v$. The cascade of lines is as follows: First, an Image needs to be taken in the *recording line,* then the Image is evaluated in the *location line,* wherein the imaging continues in the *recording line.* In the *contact line,* the Image data is used to determine the time of contact between the knives 7 and the plantlet from the Image and ensure that the weeding knives 7 are open during contact.

The image evaluation procedure is repeated, and the identified plantlet positions are also used to center the weeding machine 3 relative to the row axis o.

The procedure for evaluating and setting the line coherence is double in this case. Either procedure A is set, where SW 6 analyses the image immediately after it is acquired, i.e. the recording and location lines are linked in time, and the countdown to the contact of knives 7 and crop 1 is started at the last detected, localized and validated identification of the center 2 of the crop 1. Figure 10A and 10B show such a setup. The figure shows selected images taken after 50 ms. Since the detection field 14 was used to validate the well-identified centers 2 of the crops 1 in this particular example, images 3 and 9 will be excluded because the centers 2 of the crops 1 are detected in the very edge of location field 10 15 × 15 cm but outside the validation detection filed 14 13 × 13 cm centered relative to the location filed 10 (not shown). The last validated center 2 of the crop 1 1 is in the image 2, and, at that point, the SW 6 starts counting down 750 ms until the crop 1 1 contacts the knives 7, and guides the knives 7 around the crop 1 1 according to the specified defined zone 12. The last validated center 2 of the crop 1 2 is in the image 8, and, at that point, the SW 6 starts counting down 750 ms until the crop 1 2 contacts the knives 7, and guides the knives 7 around the crop 1 2 according to the specified defined zone 12.

Or, the procedure B is set, wherein SW 6 analyses the image with a time delay after acquiring it, i.e. the recording and location lines are separated in time. First the image is acquired and stored, and, only after a preset delay, SW 6 analyses this acquired and stored image, wherein SW 6 knows exactly when the image was acquired, with what delay it analyses it, and calculates the time to contact of the crop 1 with the weeding knives 7 using these values. Figure 11A and 11B show such a setup. Again, images 3 and 9 will be excluded due to the localization of the centers 2 of the crops 1 outside the detection field 14.

Example 2 Four-module weeding machine, towed; camera facing in front of the weeding machine; knives are placed behind the camera's field of view in the direction of the weeding machine travel; field of view 20 × 30 cm, location field 20 × 30 cm, without detection field

Weeding machine 3 consists of four weeding modules 4 without wheels and without self-drive as shown in Figure 7E. According to example 1, the weeding machine 3 was calibrated to the field of view 9 of 20 × 40 cm, the location field 10 was defined with the same dimension of 20 × 40 cm, which overlapped completely with the field of view. The defined zone 12 was preset to $r$ = 2 cm for an assumed maize root diameter of 2 cm, i.e. $r = r_K + 1$ *cm,* where $r_K$ is 1 cm. The knives 7 were in a distance of 50 cm from the edge of field of view 9. The knives 7 are placed behind each other with a horizontal overlap.

The weeding machine 3, calibrated and set up in this way, is attached to a tractor and placed on the edge of the field sown with maize, the weeding machine 3 is roughly centered on the row edge with respect to the row axis o and positioned so that the camera 8 may capture the very first plantlet in the row. The maize plantlets are sown in rows with a spacing of 10 cm and a row spacing of 30 cm. Weeds grow among the maize plantlets, suppressing the plantlets and taking away their moisture and nutrients; the weeds will then be weeded out.

The weeding machine 3 is activated, the tractor starts to drive and pulls the weeding machine 3 therebehind. At the same time, with the first movement of the weeding machine 3, the clamped weeding knives 7 get below ground level, and, in the *recording line,* the camera 8 starts to scan the terrain at a rate of 30 frames per second. Images from the camera 8 are uploaded to the SW 6, wherein *in the location line,* SW 6 creates a cutout from each image of the field of view 9 of the camera 8 in the form of the defined location field 10, which is, in this case, the entire image, which it further analyzes, when , the SW 6 searches for the centers 2 of the plants within the location field 10 using artificial intelligence learned point center recognition. Once the identified center 2 of the crop 1 has been localized within the detection field 10, the position thereof is used in the *contact line* to calculate the time or distance remaining until the weeding knives 7 contact that identified plantlet or, more precisely, the center 2 thereof, wherein the time and/or distance up to contact is counted down. In this particular case, the SW 6 calculates the distance remaining until the knives 7 come into contact with the plantlet depending on the current travel rate of the weeding machine 3, or depending on the displacement of successive images of the field of view 9 of the camera 8.

The SW 6 guides the weeding knives 7 so that the knives 7 move in a defined zone 12 around the crop centers 2 to ensure the tightest possible loosening without damaging the plantlet. When the weeding knives 7 enter this defined zone 12, the SW 6 instructs the clamped knives 7 to open temporarily. The knives move around a circle within the defined zone 12.

All these lines are linked in a cascade but shifted in time. The time offset is equal to the ratio of the distance s of the detected crop center 2 and the current speed *v*, i.e. $t = l/v$. The cascade of lines is as follows: First, an Image needs to be taken in the *recording line,* then the Image is evaluated in the *location line,* wherein the imaging continues in the *recording line.* In the *contact line,* the Image data is used to determine the time of contact between the knives 7 and the plantlet from the Image and ensure that the weeding knives 7 are open during contact.

The image evaluation procedure is repeated, and the identified plantlet positions are also used to center the weeding machine 3 relative to the row axis o.

The procedure for evaluating and setting the line coherence is double even in this case. Either procedure is set, where SW 6 analyses the image immediately after it is acquired, i.e. the recording and location lines are linked in time, and the distance countdown to the contact of knives 7 and crop 1 is started at the last detected, localized identification of the center 2 of the crop 1. Figure 10A shows such a setup. In this particular case, no images are excluded as no detection field was defined and the identified crop centers are not validated in any way.

Or, the procedure B is set, wherein SW 6 analyses the image with a time delay after acquiring it, i.e. the recording and location lines are separated in time. First the image is acquired and stored, and, only after a preset delay, SW 6 analyses this acquired and stored image, wherein SW 6 knows exactly when the image was acquired, with what delay it analyses it, and calculates the distance to contact of the crop 1 with the weeding knives 7 using these values. Figure 11A shows such a setup. Nor in this particular case, no images are excluded as no detection field was defined and the identified crop centers are not validated in any way.

Reference Signs List

1. Crop
2. Crop center
3. Weeding machine
4. Weeding module
5. Computer with evaluation software 5
6. Evaluation software featuring artificial intelligence-learned point recognition of crop centers
7. Knife
8. Camera
9. Field of view
10. Location field
11. Weeds
12. Defined zone
13. Protection zone
14. Detection field
15. Circular projection from above covering the entire leaf rosette of the crop
16. Edge of the knife 7

d    Distance between individual crops in one row
h    Lens center height of the camera 4 above ground level
$l_N$    Distance of the knives from the location field edge
$l_P$    Distance between the location field edge and the crop center
r    Radius of the protection zone circle
o    Row axis

Industrial Applicability

Automatic machine weeding, intra-row weeding in the immediate vicinity of the crop

**Claims**

1. A method of intra-row weeding of agricultural crops (1) in an immediate vicinity of their roots by means of a moving weeding machine (3) provided with a camera (8) to scan a weeding area, with software provided with a function of recognition of a cultivated crop among other crops or weeds, further provided with knives (7) positioned in or behind the area scanned by the camera (8) in a direction of weeding machine (3) travel, positioned below ground level and able to come apart from a row axis (o) and loosen the entire row up to the immediate vicinity of the crop (1),

a field of view (9) of the camera (8) is calibrated, wherein sides of the field of view (9) of the camera (8) have a length corresponding to at least a spacing (d) of the cultivated agricultural crops (1);

the weeding machine (3) is set in motion and moves parallel to the row axis (o);

the camera (8) takes images of the field of view (9) at intervals; these images are stored in an evaluation software (6);

the evaluation software (6) comprises a machine learning model trained to recognize centers (2) of the cultivated agricultural crops (1), analyzes the images of the calibrated field of view (9) of the camera (10) where it detects and localizes the centers (2) of the cultivated agricultural crops (1) using the machine learning model, and records positions of the detected and localized centers (2);

around the recorded localized centers (2), a defined zone (12) is defined in the immediate vicinity of the crop (1), within edges of the knives (7) closest to the localized center (2) of the crop (1), wherein the knives (7) are positioned horizontally, being attached to arms and the arms being attached to the weeding machine (3), wherein a distance between an attachment of the knife (7) to the arm and the edge of the knife (7) corresponds to at least $r_{15}$ - $r_K$ - 1 cm, where $r_{15}$ is a radius of a circular projection (15) from above covering an entire leaf rosette of the cultivated crops (1) and $r_K$ is a radius of the root of the cultivated crop (1), the defined zone (12) is defined between a circle of radius (r) centered on the detected center (2) of the crop (1) and a square centered on the detected center (2) of the crop (1), wherein the circle radius (r) is equal to the radius ($r_K$) of the root of the cultivated crop (1) + 1 cm, and the square has a side length of 2r + 4 cm, before the edges of the knives (7) closest to the localized center (2) of the crop (1) enter the defined zones (12), the edges of the knives (7) are situated close to each other and centered on the row axis (o), and after the edges of the knives (7) closest to the localized center (2) of the crop (1) have entered the defined zones (12), the evaluation software (6) commands the edges of knives (7) to come temporarily apart within the defined zone (12) and, at the latest, when the edges of the knives (7) leave the defined zones (12), the evaluation software (6) commands the edges of the knives (7) to come back close to each other.

2. The method of intra-row weeding of agricultural crops (1) according to claim 1, **characterized in that** the evaluation software (6) commands the edges of knives (7) to come temporarily apart within the defined zone (12), at the square edge at the earliest and at the circle edge at the very latest within the defined zone (12) in the direction of travel of the weeding machine (3).

3. The method of intra-row weeding of agricultural crops (1) according to claim 1, **characterized in that** the knife (7) is attached to the arm by means of a horizontal extension of the knife (7).

4. The method of intra-row weeding of agricultural crops (1) according to claim 1, **characterized in that** a standard is scanned into the field of view (9) of the camera (8) at least at two different heights to calibrate a spatial distortion of the field of view (9) of the camera (8).

5. The method of intra-row weeding of agricultural crops (1) according to claim 4, **characterized in that** the standard is flat, has a negligible height and comprises patterns or markings.

6. The method of intra-row weeding of agricultural crops (1) according to claim 1, **characterized in that** a location field (10) is defined within the field of view (9) where the evaluation software (6) detects and localizes the centers (2) of the cultivated agricultural crops (1), wherein the location field (10) is smaller than the size of the field of view (9).

7. The method of intra-row weeding of agricultural crops (1) according to claim 6, **characterized in that** the at least one distance of at least one point of at least one of the fields (9, 10) from the knives (7) is entered into the evaluation software (6).

8. Method of intra-row weeding of agricultural crops (1) according to claim 6, **characterized in that** the length of the location field (10) in the direction of travel of the weeding machine (3) is defined to be equal to or shorter than the spacing (d) between the individual crops (1) in one row.

9. Method of intra-row weeding of agricultural crops (1) according to claim 6, **characterized in that** a detection field (14) smaller than the location field (10) is defined within the location field (10) and the center (2) of the crop (1) localized in the location field (10) is validated by overlapping with the detection field (14).

**10.** Method of intra-row weeding of agricultural crops (1) according to claim 1 and/or 6 and/or 9, **characterized in that** the location field (10) and/or the detection field (14) and/or the field of view (9) are defined in the shape of a rectangle or a square.

**11.** Method of intra-row weeding of agricultural crops (1) according to claim 9, **characterized in that** the length of the detection field (14) in the direction of travel of the weeding machine (3) and the width of the detection field (14) are defined for crops (1) with a circular projection (15) from above covering the entire leaves of the crop (1) less than 8 cm to a maximum of $d - 2$ cm, where (d) is the spacing between the individual crops (1) in a single row.

**12.** Method of intra-row weeding of agricultural crops (1) according to claim 9, **characterized in that** the length of the detection field (14) in the direction of travel of the weeding machine (3) and the width of the detection field (14) are defined for crops with a circular projection (15) from above covering the entire leaves of the crop (1) greater than 8 cm to a maximum of $d - 5$ cm, where (d) is the spacing between the individual crops (1) in a single row.

**13.** Method of intra-row weeding of agricultural crops (1) according to claim 1, **characterized in that** the interval of taking images of the field of view (9) is regular and is 10 to 100 frames per second.

**14.** Method of intra-row weeding of agricultural crops (1) according to claim 1, **characterized in that** the camera (8) is a 3D surround stereo camera.

**15.** A movable weeding machine (3) equipped with knives (7) configured to be positioned below ground level

in a working position and able to come apart from each other and from a row axis (o) and which loosen an entire row up to an immediate vicinity of crops (1), further equipped with a camera (8) configured to scan a weeding area, the movable weeding machine comprises at least one weeding module (4) provided with at least one pair of knives (7) centered with respect to the row axis (o), wherein the knives (7) are positioned horizontally, being attached to arms and the arms being attached to the weeding machine (3), wherein a distance between an attachment of the knife (7) to the arm and an edge of the knife (7) corresponds to at least $r_{15} - r_K - 1$ cm, where $r_{15}$ is a radius of a circular projection (15) from above covering the entire leaf rosette of the cultivated agricultural crops (1) and $r_K$ is a radius of the root of the cultivated crop (1), the knives (7) are positioned in or behind a space scanned by the camera (8) in a direction of travel of the weeding machine (3), and further comprising at least one computer (5) with evaluation software (6) having a machine learning model trained to recognize centers (2) of the cultivated crops (1),
the weeding machine being configured for weeding in the immediate vicinity of the root of the crop according to the method of claim 1.

**16.** The movable weeding machine (3) according to claim 15, **characterized in that** the camera (8) is a 3D surround stereo camera.

**17.** The movable weeding machine (3) according to claim 15, **characterized in that** it is provided with at least one all-terrain wheel fitting closely to the ground level.

**18.** The movable weeding machine (3) according to claim 15, **characterized in that** the shortest mutual distance of the lowered knives (7) in a pair is 0 to 1 cm.

**19.** The movable weeding machine (3) according to claim 15, **characterized in that** the knives (7) are able to come apart from the row axis (o) using a joint or a piston on the arm and are driven by a drive that is hydraulic, electric and/or pneumatic.

**20.** The movable weeding machine (3) according to claim 15, **characterized in that** the blades (7) are of the hoe or plough or rake or finger or blade or disc type.

**Patentansprüche**

**1.** Verfahren zur Unkrautbekämpfung zwischen den Reihen von landwirtschaftlichen Kulturen (1) in unmittelbarer Nähe ihrer Wurzeln mittels einer sich bewegenden Jätmaschine (3), die mit einer Kamera (8) versehen ist, um einen Jätbereich zu scannen, mit einer Software, die mit einer Funktion zur Erkennung einer angebauten Kultur neben anderen Kulturen oder Unkräutern versehen ist, ferner mit Messern (7) versehen ist, die in oder hinter dem von der Kamera (8) gescannten Bereich in Fahrtrichtung der Jätmaschine (3) angeordnet sind, unterhalb des Bodenniveaus positioniert sind und in der Lage sind, sich von einer Reihenachse (o) zu lösen und die gesamte Reihe bis in die unmittelbare Nähe der Kultur (1) aufzulockern,

ein Sichtfeld (9) der Kamera (8) kalibriert wird, wobei Seiten des Sichtfelds (9) der Kamera (8) eine Länge aufweisen, die mindestens einem Abstand (d) der angebauten landwirtschaftlichen Kulturen (1) entspricht;

die Jätmaschine (3) in Bewegung gesetzt wird und sich parallel zur Reihenachse (o) bewegt;

die Kamera (8) in Abständen Bilder des Sichtfeldes (9) aufnimmt; diese Bilder in einer Auswertesoftware (6) gespeichert werden;

die Auswertesoftware (6) ein Modell für maschinelles Lernen umfasst, das darauf trainiert ist, Zentren (2) der landwirtschaftlichen Kulturen (1) zu erkennen, die Bildaufnahmen des kalibrierten Sichtfelds (9) der Kamera (10) analysiert, wo es die Zentren (2) der landwirtschaftlichen Kulturen (1) unter Verwendung des Modells für maschinelles Lernen erfasst und lokalisiert, und Positionen der erfassten und lokalisierten Zentren (2) aufzeichnet;

um die erfassten lokalisierten Mitten (2) eine definierte Zone (12) in unmittelbarer Nähe der Kultur (1), innerhalb der Schneiden der Messer (7), die der lokalisierten Mitte (2) der Kultur (1) am nächsten sind, definiert ist, wobei die Messer (7) horizontal positioniert sind, wobei sie an Armen befestigt sind und die Arme an der Jätmaschine (3) befestigt sind, wobei ein Abstand zwischen einer Befestigung des Messers (7) an dem Arm und der Schneide des Messers (7) mindestens $r_{15} - r_K - 1$ cm entspricht, wobei $r_{15}$ ein Radius einer kreisförmigen Projektion (15) von oben ist, die eine gesamte Blattrosette der angebauten Kultur (1) abdeckt, und $r_K$ ein Radius der Wurzel der angebauten Kultur (1) ist, die definierte Zone (12) zwischen einem Kreis von Radius (r) definiert ist, der auf der erfassten Mitte (2) der Kultur (1) zentriert ist, und einem Quadrat, das auf der erfassten Mitte (2) der Kultur (1) zentriert ist, wobei der Kreisradius (r) gleich dem Radius $(r_K)$ der Wurzel der angebauten Kultur (1) + 1 cm ist, und das Quadrat eine Seitenlänge von $2r + 4$ cm aufweist, bevor die der lokalisierten Mitte (2) der Kultur (1) nächstliegenden Schneiden der Messer (7) in die definierten Zonen (12) eintreten, die Schneiden der Messer (7) dicht beieinander und auf der Reihenachse (o) zentriert liegen und nachdem die der lokalisierten Mitte (2) der Kultur (1) nächstliegenden Schneiden der Messer (7) in die definierten Zonen (12) eingetreten sind, die Auswertesoftware (6) ein vorübergehendes Auseinanderfahren der Schneiden der Messer (7) innerhalb der definierten Zone (12) und spätestens wenn die Schneiden der Messer (7) die definierten Zonen (12) verlassen, die Auswertesoftware (6) ein gegenseitiges Wiederannähern der Schneiden der Messer (7) befiehlt.

2. Verfahren zur Unkrautbekämpfung zwischen den Reihen von landwirtschaftlichen Kulturen (1) nach Anspruch 1, **dadurch gekennzeichnet, dass** die Auswertesoftware (6) ein temporäres Auseinanderfahren der Schneiden von Messern (7) innerhalb der definierten Zone (12), frühestens am Quadratrand und spätestens am Kreisrand innerhalb der definierten Zone (12) in Fahrtrichtung der Jätmaschine (3) befiehlt.

3. Verfahren zur Unkrautbekämpfung zwischen den Reihen von landwirtschaftlichen Kulturen (1) nach Anspruch 1, **dadurch gekennzeichnet, dass** das Messer (7) mittels einer horizontalen Verlängerung des Messers (7) an dem Arm befestigt ist.

4. Verfahren zur Unkrautbekämpfung zwischen den Reihen von landwirtschaftlichen Kulturen (1) nach Anspruch 1, **dadurch gekennzeichnet, dass** ein Standard in das Sichtfeld (9) der Kamera (8) in mindestens zwei unterschiedlichen Höhen eingescannt wird, um eine räumliche Verzerrung des Sichtfelds (9) der Kamera (8) zu kalibrieren.

5. Verfahren zur Unkrautbekämpfung zwischen den Reihen von landwirtschaftlichen Kulturen (1) nach Anspruch 4, **dadurch gekennzeichnet, dass** der Standard flach ist, eine vernachlässigbare Höhe aufweist und Muster oder Markierungen umfasst.

6. Verfahren zur Unkrautbekämpfung zwischen den Reihen von landwirtschaftlichen Kulturen (1) nach Anspruch 1, **dadurch gekennzeichnet, dass** innerhalb des Sichtfeldes (9) ein Standortfeld (10) definiert wird, in dem die Auswertesoftware (6) die Zentren (2) der landwirtschaftlichen Kulturen (1) erfasst und lokalisiert, wobei das Standortfeld (10) kleiner als die Größe des Sichtfeldes (9) ist.

7. Verfahren zur Unkrautbekämpfung zwischen den Reihen von landwirtschaftlichen Kulturen (1) nach Anspruch 6, **dadurch gekennzeichnet, dass** der Abstand mindestens eines Punktes mindestens eines der Felder (9, 10) von den Messern (7) in die Auswertesoftware (6) eingegeben wird.

8. Verfahren zur Unkrautbekämpfung zwischen den Reihen von landwirtschaftlichen Kulturen (1) nach Anspruch 6, **dadurch gekennzeichnet, dass** die Länge des Standortfeldes (10) in Fahrtrichtung der Jätmaschine (3) gleich oder kürzer als der Abstand (d) zwischen den einzelnen Kulturen (1) in einer Reihe definiert ist.

9. Verfahren zur Unkrautbekämpfung zwischen den Reihen von landwirtschaftlichen Kulturen (1) nach Anspruch 6, **dadurch gekennzeichnet, dass** innerhalb des Standortfeldes (10) ein Detektionsfeld (14) definiert wird, das kleiner als das Standortfeld (10) ist, und das im Standortfeld (10) lokalisierte Zentrum (2) der Kultur (1) durch Überlappung mit dem Detektionsfeld (14) validiert wird.

10. Verfahren zur Unkrautbekämpfung zwischen den Reihen von landwirtschaftlichen Kulturen (1) nach Anspruch 1 und/oder 6 und/oder 9, **dadurch gekennzeichnet, dass** das Standortfeld (10) und/oder das Detektionsfeld (14) und/oder das Sichtfeld (9) in Form eines Rechtecks oder eines Quadrats definiert werden.

11. Verfahren zur Unkrautbekämpfung zwischen den Reihen von landwirtschaftlichen Kulturen (1) nach Anspruch 9, **dadurch gekennzeichnet, dass** die Länge des Detektionsfeldes (14) in Fahrtrichtung der Jätmaschine (3) und die Breite des Detektionsfeldes (14) für Kulturen (1) mit einer kreisförmigen Projektion (15) von oben definiert sind, die die gesamten Blätter der Kultur (1) weniger als 8 cm bis maximal $d - 2\ cm$ abdeckt, wobei (d) der Abstand zwischen den einzelnen Kulturen (1) in einer einzigen Reihe ist.

12. Verfahren zur Unkrautbekämpfung zwischen den Reihen von landwirtschaftlichen Kulturen (1) nach Anspruch 9, **dadurch gekennzeichnet, dass** die Länge des Detektionsfeldes (14) in Fahrtrichtung der Jätmaschine (3) und die Breite des Detektionsfeldes (14) für Kulturen mit einer kreisförmigen Projektion (15) von oben, die die gesamten Blätter der Kultur (1) abdeckt, größer als 8 cm bis maximal $d - 5\ cm$ definiert sind, wobei (d) der Abstand zwischen den einzelnen Kulturen (1) in einer einzigen Reihe ist.

13. Verfahren zur Unkrautbekämpfung zwischen den Reihen von landwirtschaftlichen Kulturen (1) nach Anspruch 1, **dadurch gekennzeichnet, dass** das Intervall der Bildaufnahmen des Sichtfeldes (9) regelmäßig ist und 10 bis 100 Bilder pro Sekunde beträgt.

14. Verfahren zur Unkrautbekämpfung zwischen den Reihen von landwirtschaftlichen Kulturen (1) nach Anspruch 1, **dadurch gekennzeichnet, dass** die Kamera (8) eine 3D-Surround-Stereokamera ist.

15. Bewegliche Jätmaschine (3), die mit Messern (7) ausgestattet ist, die in einer Arbeitsposition unter Bodenniveau positioniert sind, auseinanderfahren und sich von einer Reihenachse (o) lösen können und eine ganze Reihe bis in unmittelbare Nähe von Kulturen (1) auflockern, und die ferner mit einer Kamera (8) ausgestattet ist, die konfiguriert ist, um einen Jätbereich zu scannen,

    wobei die bewegliche Jätmaschine mindestens ein Jätmodul (4) umfasst, das mit mindestens einem Paar Messer (7) versehen ist, das in Bezug auf die Reihenachse (o) zentriert ist, wobei die Messer (7) horizontal positioniert sind, an Armen befestigt sind und die Arme an der Jätmaschine (3) befestigt sind, wobei ein Abstand zwischen einer Befestigung des Messers (7) an dem Arm und einer Schneide des Messers (7) mindestens $r_{15} - r_K - 1$ cm entspricht, wobei $r_{15}$ ein Radius eines kreisförmigen Vorsprungs (15) von oben ist, der die gesamte Blattrosette der Kultur (1) abdeckt, und $r_K$ ein Radius der Wurzel der Kultur (1) ist, die Messer (7) in oder hinter einem von der Kamera (8) in Fahrtrichtung der Jätmaschine (3) abgetasteten Raum positioniert sind, und ferner mindestens einen Computer (5) mit einer Auswertesoftware (6) umfasst, die darauf trainiert ist, Zentren (2) der Kultur (1) zu erkennen,
wobei die Jätmaschine zum Unkrautjäten in unmittelbarer Nähe der Wurzel der Kultur gemäß dem Verfahren nach Anspruch 1 konfiguriert ist.

16. Bewegliche Jätmaschine (3) nach Anspruch 15, **dadurch gekennzeichnet, dass** die Kamera (8) eine 3D-Surround-Stereokamera ist.

17. Bewegliche Jätmaschine (3) nach Anspruch 15, **dadurch gekennzeichnet, dass** sie mit mindestens einem bodennahen geländegängigen Rad versehen ist.

18. Bewegliche Jätmaschine (3) nach Anspruch 15, **dadurch gekennzeichnet, dass** der kürzeste gegenseitige Abstand der abgesenkten Messer (7) in einem Paar 0 bis 1 cm beträgt.

19. Bewegliche Jätmaschine (3) nach Anspruch 15, **dadurch gekennzeichnet, dass** die Messer (7) über ein Gelenk oder einen Kolben am Arm von der Reihenachse (o) lösbar sind und hydraulisch, elektrisch und/oder pneumatisch angetrieben werden.

20. Bewegliche Jätmaschine (3) nach Anspruch 15, **dadurch gekennzeichnet, dass** die Messer (7) vom Hacken- oder Pflug- oder Rechen- oder Finger- oder Messer- oder Scheibentyp sind.

## Revendications

1. Méthode de désherbage intra-rang des cultures agricoles (1) à proximité immédiate de leurs racines au moyen d'une machine de désherbage (3) mobile équipée d'une caméra (8) pour balayer une zone de désherbage, avec un logiciel doté d'une fonction de reconnaissance de la culture cultivée parmi d'autres cultures ou mauvaises herbes, équipé en outre de couteaux (7) positionnés dans ou derrière la zone balayée par la caméra (8) dans le sens de déplacement de la machine de désherbage (3), positionnés sous le niveau du sol et capables de s'écarter de l'axe du rang (o) et d'ameublir un rang entier jusqu'à la proximité immédiate de la culture (1),

le champ de vision (9) de la caméra (8) est calibré, les côtés du champ de vision (9) de la caméra (8) ayant une longueur correspondant au moins à un espacement (d) des cultures (1) agricoles cultivées ;

la machine de désherbage (3) est mise en mouvement et se déplace parallèlement à l'axe du rang (o) ;

la caméra (8) prend des images du champ de vision (9) à intervalles réguliers ; ces images sont stockées dans un logiciel d'évaluation (6) ;

le logiciel d'évaluation (6) comprend un modèle d'apprentissage automatique entraîné à reconnaître les centres (2) des cultures (1) agricoles cultivées, analyse les images du champ de vision calibré (9) de la caméra (10) où il détecte et localise les centres (2) des cultures (1) agricoles cultivées à l'aide d'un modèle d'apprentissage automatique, et enregistre les positions des centres détectés et localisés (2) ;

autour des centres localisés (2) enregistrés, une zone définie (12) est définie à proximité immédiate de la culture (1) à l'intérieur des bords des couteaux (7) les plus proches du centre localisé (2) de la culture (1), où les couteaux (7) sont positionnés horizontalement, étant fixés aux bras et les bras étant fixés à la machine de désherbage (3), où la distance entre une fixation du couteau (7) au bras et le bord du couteau (7) correspond à au moins $r_{15}$ - $r_K$ - 1 cm, où $r_{15}$ est le rayon d'une projection circulaire (15) vue de dessus couvrant toute la rosette foliaire des cultures cultivées (1) et $r_K$ est le rayon de la racine de la culture (1) cultivée, la zone définie (12) est définie entre un cercle de rayon (r) centré sur le centre détecté (2) de la culture (1) et un carré centré sur le centre détecté (2) de la culture (1), où le rayon de cercle (r) est égal au rayon ($r_K$) de la racine de la culture (1) cultivée + 1 cm, et le carré a une longueur latérale de 2r + 4 cm,

avant que les bords des couteaux (7) les plus proches du centre localisé (2) de la culture (1) n'entrent dans les zones définies (12), les bords des couteaux (7) sont situées à proximité l'une de l'autre et centrées sur l'axe du rang (o), et après que les bords des couteaux (7) les plus proches du centre localisé (2) de la culture (1) sont entrées dans les zones définies (12), le logiciel d'évaluation (6) commande l'écartement temporaire des bords des couteaux (7) à l'intérieur de la zone définie (12) et, au plus tard, lorsque les bords des couteaux (7) quittent les zones définies (12), le logiciel d'évaluation (6) commande le rapprochement des bords des couteaux (7) entre eux.

2. Méthode de désherbage intra-rang des cultures (1) agricoles selon la revendication 1, **caractérisé en ce que** le logiciel d'évaluation (6) commande l'écartement temporaire des bords des couteaux (7) à l'intérieur de la zone définie (12), au plus tôt au bord carré et au plus tard au bord circulaire à l'intérieur de la zone définie (12) dans le sens de déplacement de la machine de désherbage (3).

3. Méthode de désherbage intra-rang des cultures (1) agricoles selon la revendication 1, **caractérisé en ce que** le couteau (7) est fixé au bras au moyen d'une extension horizontale du couteau (7).

4. Méthode de désherbage intra-rang des cultures (1) agricoles selon la revendication 1, **caractérisé en ce qu'**une norme est balayée dans le champ de vision (9) de la caméra (8) à au moins deux hauteurs différentes afin de calibrer une distorsion spatiale du champ de vision (9) de la caméra (8).

5. Méthode de désherbage intra-rang des cultures (1) agricoles selon la revendication 4, **caractérisé en ce que** la norme est plate, présente une hauteur négligeable comprend des motifs ou des marquages.

6. Méthode de désherbage intra-rang des cultures (1) agricoles selon la revendication 1, **caractérisé en ce que** l'on définit un champ de localisation (10) dans le champ de vision (9) où le logiciel d'évaluation (6) détecte et localise les centres (2) des cultures (1) agricoles cultivées, le champ de localisation (10) étant plus petit que la taille du champ de vision (9).

7. Méthode de désherbage intra-rang des cultures (1) agricoles selon la revendication 6, **caractérisé en ce que** l'au moins une distance d'au moins un point d'au moins un des champs (9, 10) par rapport aux couteaux (7) est saisie dans le logiciel d'évaluation (6).

8. Méthode de désherbage intra-rang des cultures (1) agricoles selon la revendication 6, **caractérisé en ce que** la longueur du champ de localisation (10) dans le sens de déplacement de la machine de désherbage (3) est définie comme égale ou inférieure à l'espacement (d) entre les cultures (1) individuelles d'un rang.

9. Méthode de désherbage intra-rang des cultures (1) agricoles selon la revendication 6, **caractérisé en ce qu'**on définit un champ de détection (14) plus petit que le champ de localisation (10) à l'intérieur du champ de localisation (10) et on valide le centre (2) de la culture (1) localisé dans le champ de localisation (10) par chevauchement avec le champ de détection (14).

10. Méthode de désherbage intra-rang des cultures (1) agricoles selon l'une quelconque des revendications 1 et/ou 6 et/ou 9, **caractérisé en ce que** le champ de localisation (10) et/ou le champ de détection (14) et/ou le champ de vision (9) sont définis en forme de rectangle ou de carré.

11. Méthode de désherbage intra-rang des cultures (1) agricoles selon la revendication 9, **caractérisé en ce que** la longueur du champ de détection (14) dans le sens de déplacement de la machine de désherbage (3) et la largeur du champ de détection (14) sont définies pour les cultures (1) ayant une projection circulaire (15) vue de dessus couvrant l'ensemble des feuilles de la culture (1) inférieure à 8 cm à un maximum de *d - 2 cm,* où (d) est l'espacement entre les cultures (1) individuelles sur un même rang.

12. Méthode de désherbage intra-rang des cultures (1) agricoles selon la revendication 9, **caractérisé en ce que** la longueur du champ de détection (14) dans le sens de déplacement de la machine de désherbage (3) et la largeur du champ de détection (14) sont définies pour des cultures ayant une projection circulaire (15) vue de dessus couvrant l'ensemble des feuilles de la culture (1) supérieure à 8 cm jusqu'à un maximum de *d - 5 cm,* où (d) est l'espacement entre les cultures (1) individuelles sur un même rang.

13. Méthode de désherbage intra-rang des cultures (1) agricoles selon la revendication 1, **caractérisé en ce que** l'intervalle de prise d'images du champ de vision (9) est régulier et est de 10 à 100 images par seconde.

14. Méthode de désherbage intra-rang des cultures (1) agricoles selon la revendication 1, **caractérisé en ce que** la caméra (8) est une caméra stéréo panoramique 3D.

15. Machine de désherbage (3) mobile équipée de couteaux (7) configurés pour être positionnés sous le niveau du sol en position de travail et capables de s'écarter l'un de l'autre et de l'axe du rang (o), et qui ameublissent un rang entier jusqu'à la proximité immédiate des cultures (1), équipés en outre d'une caméra (8) configurée pour balayer une zone de désherbage,

> la machine de désherbage mobile comprend au moins un module de désherbage (4) équipé d'au moins une paire de couteaux (7) centrés par rapport à l'axe du rang (o), où les couteaux (7) sont positionnés horizontalement, étant fixés aux bras et les bras étant fixés à la machine de désherbage (3), où la distance entre une fixation du couteau (7) au bras et le bord du couteau (7) correspond à au moins $r_{15}$ - $r_K$ - 1 cm, où $r_{15}$ est le rayon d'une projection circulaire (15) vue de dessus couvrant toute la rosette foliaire des cultures (1) agricoles cultivées et $r_K$ est le rayon de la racine de la culture (1) cultivée, les couteaux (7) sont positionnés dans ou derrière un espace balayé par la caméra (8) dans le sens de déplacement de la machine de désherbage (3), et comprenant en outre au moins un ordinateur (5) avec un logiciel d'évaluation (6) ayant un modèle d'apprentissage automatique formé pour reconnaître les centres (2) des cultures (1) cultivées,
la machine de désherbage étant configurée pour désherber à proximité immédiate de la racine de la culture selon la méthode de la revendication 1.

16. Machine de désherbage (3) mobile selon la revendication 15, **caractérisée en ce que** la caméra (8) est une caméra stéréo panoramique 3D.

17. Machine de désherbage (3) mobile selon la revendication 15, **caractérisée en ce qu'**elle est équipée d'au moins une roue tout terrain s'adaptant étroitement au niveau du sol.

18. Machine de désherbage (3) mobile selon la revendication 15, **caractérisée en ce que** la distance mutuelle la plus courte entre les couteaux (7) abaissés d'une paire est de 0 à 1 cm.

19. Machine de désherbage (3) mobile selon la revendication 15, **caractérisée en ce que** les couteaux (7) sont capables de s'écarter de l'axe du rang (o) à l'aide d'une articulation ou d'un piston sur le bras et sont entraînés par un entraînement hydraulique, électrique et/ou pneumatique.

20. Machine de désherbage (3) mobile selon la revendication 15, **caractérisée en ce que** les lames (7) sont du type houe ou charrue ou râteau ou doigt ou lame ou disque.

Fig. 1A

Fig.1B

Fig. 2A

Fig. 2B

Fig. 3A

Fig. 3B.1

Fig. 3B.2

Fig. 3B.3

Fig. 3B.4

Fig. 3C

Fig. 3D

Fig. 3E

Fig. 3F

Fig. 4A

Fig. 4B

Fig. 4C

Fig. 4D

Fig. 4E

Fig. 5A

Fig. 5B

Fig. 5C

Fig. 6A

Fig. 6B

Fig. 6C

Fig. 6D

weeding direction

Fig. 7A

Fig. 7B

Fig. 7C

Fig. 7D

Fig. 7E

Fig. 8

Fig. 9A

Fig. 9B

1000 ms
1. location

700 ms
n. location

0 ms
contact

Recording and location lines

Contact line

Fig. 10A

| image | Time (ms) | RECORDING AND LOCATION lines of the centers of the crop $$t_{contact} = -\frac{s}{v} = \frac{l_N + l_P}{v}$$ | | Time to contact | CONTACT line of the knives | Time to contact |
|---|---|---|---|---|---|---|
| 1 | 0 | | $t_1 = \dfrac{35 + 5}{0,05}$ | **800 ms** to contact of knives with the crop 1 | | 0 ms |
| 2 | 50 | | $t_1 = \dfrac{35 + 2,5}{0,05}$ | **750 ms** to contact of knives with the crop 1 | | 0 ms |
| 3 | 100 | | $t_1 = \dfrac{35 + 0}{0,05}$ $t_2 = \dfrac{35 + 15}{0,05}$ | **700 ms** to contact of knives with the crop 1 **1000 ms** to contakt of knives with the crop 2 | | 0 ms |
| 4 | 150 | | $t_2 = \dfrac{35 + 12,5}{0,05}$ | **950 ms** to contact of knives with the crop 2 | | 0 ms |
| 5 | 200 | | $t_2 = \dfrac{35 + 10}{0,05}$ | **900 ms** to contact of knives with the crop 2 | | 0 ms |

Fig. 10B 1. part

EP 4 326 039 B1

| | | | | | | |
|---|---|---|---|---|---|---|
| 6 | 250 | | $t_2 = \dfrac{35 + 7{,}5}{0{,}05}$ | **850 ms**<br>to contact<br>of knives with<br>the crop 2 | | 0 ms |
| 7 | 300 | | $t_2 = \dfrac{35 + 5}{0{,}05}$ | **800 ms**<br>to contact<br>of knives with<br>the crop 2 | | 0 ms |
| 8 | 350 | | $t_2 = \dfrac{35 + 2{,}5}{0{,}05}$ | **750 ms**<br>to contact<br>of knives with<br>the crop 2 | | 0 ms |
| 9 | 400 | | $t_2 = \dfrac{35 + 0}{0{,}05}$ | **700 ms**<br>to contact<br>of knives with<br>the crop 2 | | 0 ms |
| | | | $t_3 = \dfrac{35 + 15}{0{,}05}$ | **1000 ms**<br>to contact<br>of knives with<br>the crop 3 | | |
| 10 | 450 | | $t_3 = \dfrac{35 + 12{,}5}{0{,}05}$ | **950 ms**<br>to contact<br>of knives with<br>the crop 3 | | 0 ms |

Fig. 10B 2. part

| 1000 ms | 500 ms | 200 ms | 0 ms |
|---------|--------|--------|------|
| record | 1. location | n. location | contact |
| Recording line | Location line | | Contact line |

Fig. 11A

| image | Time (ms) | RECORDING line | LOCATION line $t_{contact} = -\frac{s}{v} = \frac{l_N + l_P}{v}$ | Time to contact | CONTACT line of the knives | Time to contact |
|---|---|---|---|---|---|---|
| 1 | 0 | | | $t_1 = \dfrac{10 + 5}{0,05}$ — 300 ms to contact of knives with the crop 1 | | 0 ms |
| 2 | 50 | | | $t_1 = \dfrac{10 + 2,5}{0,05}$ — 250 ms to contact of knives with the crop 1 | | 0 ms |
| 3 | 100 | | | $t_1 = \dfrac{10 + 0}{0,05}$ — 200 ms to contact of knives with the crop 1 | | 0 ms |
| | | | | $t_2 = \dfrac{10 + 15}{0,05}$ — 500 ms to contact of knives with the crop 2 | | |
| 4 | 150 | | | $t_2 = \dfrac{10 + 12,5}{0,05}$ — 450 ms to contact of knives with the crop 2 | | 0 ms |
| 5 | 200 | | | $t_2 = \dfrac{10 + 10}{0,05}$ — 400 ms to contact of knives with the crop 2 | | 0 ms |

Fig. 11B 1. part

EP 4 326 039 B1

| | | | | | | | |
|---|---|---|---|---|---|---|---|
| 6 | 250 | | | $t_2 = \dfrac{10 + 7,5}{0,05}$ | 350 ms to contact of knives with the crop 2 | | 0 ms |
| 7 | 300 | | | $t_2 = \dfrac{10 + 5}{0,05}$ | 300 ms to contact of knives with the crop 2 | | 0 ms |
| 8 | 350 | | | $t_2 = \dfrac{10 + 2,5}{0,05}$ | 250 ms to contact of knives with the crop 2 | | 0 ms |
| 9 | 400 | | | $t_2 = \dfrac{10 + 0}{0,05}$<br>$t_3 = \dfrac{10 + 15}{0,05}$ | 200 ms to contact of knives with the crop 2<br>500 ms to contact of knives with the crop 3 | | 0 ms |
| 10 | 450 | | | $t_3 = \dfrac{10 + 12,5}{0,05}$ | 450 ms to contact of knives with the crop 3 | | 0 ms |

Fig. 11B 2. part

EP 4 326 039 B1

Fig. 12A

Fig. 12B

Fig. 12C

Fig. 12D

Fig. 12E

Fig. 13A

Fig. 13B

Fig. 13C

Fig. 13D

Fig. 14A

Fig. 14B

Fig. 14C

Fig. 15A

Fig. 15B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008135867 A2
- US 2014180549 A1
- NL 2001003
- EP 3578025 A2

- WO 2021016444 A1
- WO 2021159123 A1
- WO 12082021 A1

**Non-patent literature cited in the description**

- **FENNIMORE ; STEVEN A et al.** Technology for automation of weed control in specialty crops. *Weed Technology*, 2016, vol. 30 (4), 823-837

- **TILLETT, N. D. et al.** Mechanical within-row weed control for transplanted crops using computer vision. *Biosystems Engineering*, 2008, vol. 99 (2), 171-178